# EUROPEAN PATENT SPECIFICATION

(11) **EP 4 020 210 B1**
(45) Date of publication and mention of the grant of the patent: **01.04.2026**
(21) Application number: 20869498.4
(22) Date of filing: 21.09.2020
(51) Int. Cl.: G06F 9/52

(54) **MULTI-THREAD SYNCHRONIZATION METHOD AND ELECTRONIC DEVICE**
VERFAHREN ZUR SYNCHRONISIERUNG MEHRERER FÄDEN UND ELEKTRONISCHE VORRICHTUNG
PROCÉDÉ DE SYNCHRONISATION À FILS MULTIPLES ET DISPOSITIF ÉLECTRONIQUE

(30) Priority: 25.09.2019 CN 201910912971; 31.03.2020 CN 202010245880
(43) Date of publication of application: 29.06.2022
(73) Proprietor: Huawei Technologies Co., Ltd., Longgang District Shenzhen, Guangdong 518129 (CN)
(72) Inventor: YANG, Qibin, Shenzhen, Guangdong 518129 (CN); HUANG, Shiyu, Shenzhen, Guangdong 518129 (CN)
(74) Representative: Goddar, Heinz J.
(86) International application number: PCT/CN2020/116437
(87) International publication number: WO 2021/057643

(56) References cited:
- WO-A1-00/46672
- CN-A- 1 601 478
- CN-A- 102 566 979
- CN-A- 105 700 939
- CN-A- 111 552 574
- US-A1- 2006 288 192
- US-A1- 2018 004 571
- US-B1- 8 752 057
- NATHAN R TALLENT ET AL: "Analyzing lock contention in multithreaded applications", PROCEEDINGS OF THE 15TH ACM SIGPLAN SYMPOSIUM ON PRINCIPLES AND PRACTICE OF PARALLEL PROGRAMMING, ACM, 2 PENN PLAZA, SUITE 701 NEW YORK NY 10121-0701 USA, 9 January 2010 (2010-01-09), pages 269 - 280, XP058344730, ISBN: 978-1-60558-877-3, DOI: 10.1145/1693453.1693489

## Description

### TECHNICAL FIELD

This application relates to the field of terminal technologies, and in particular, to a multi-thread synchronization method and an electronic device.

### BACKGROUND

An Android (Android) operating system is usually applied to an electronic device such as a mobile phone or a tablet computer, providing a unified interface and a friendly interaction interface for a user to use the electronic device, and supporting multi-thread running. Currently, a shared resource (for example, a shared memory, shared code, and shared data) can be accessed by a plurality of threads in the Android operating system. A lock is used to protect the shared resource, to prevent the plurality of threads from gaining access to the shared resource at the same time. For example, a lock 1 is used to protect a shared resource 1. Only a thread of the plurality of threads that holds the lock 1 can gain access to the shared resource 1. Once a thread obtains the lock 1, another thread cannot hold the lock 1, that is, the lock 1 can be held by only one thread at a time. The another thread can obtain an opportunity to hold the lock 1 only after the thread that holds the lock 1 releases the lock 1.

However, a thread usually contends for a lock according to a lock coarsening policy in the conventional technology. In this manner, although a lock can be held by only one thread at a same moment, duration for gaining access to the shared resource by the lock thread is likely to increase, a stalling probability of the electronic device is increased, and user experience is reduced.
CN 102 566 979 A discloses a method, device and multi-core processor system for realizing a self-adaptive lock, wherein the method comprises the following steps: when a new first thread attempts to acquire the self-adaptive lock, if the self-adaptive lock is idle, enabling the first thread to acquire the self-adaptive lock, and otherwise, enabling the first thread to enter into a spinning state or an energy-saving state according to the contention degree of the self-adaptive lock; when the first thread is in the energy-saving state, enabling the first thread to wait for being awaken to enter into the spinning state, or when the first thread is in the spinning state, enabling the first thread to contend for the self-adaptive lock till the first thread gets the self-adaptive lock by contention. When the operation of sharing resources protected by the self-adaptive lock is completed, the self-adaptive lock is released; and when the self-adaptive lock is released, if the thread is in the energy-saving state, another thread in the energy-saving state is awakened, and the thread is enabled to enter the spinning state so as to enable other threads which are in the spinning state to contend for the self-adaptive lock. When the number of threads contending for the self-adaptive lock exceeds a certain number, the excess threads are put into a energy-saving state
CN 1 601 478 A discloses a method for managing a mutex in a data processing system. For each mutex, a count is maintained of the number of threads that are spinning while waiting to acquire a mutex. If a thread attempts to acquire a locked mutex, then the thread enters a spin state, or a sleep State based on restrictive conditions and the number of threads that are spinning during the attempted acquisition. In addition, the relative length of time that is required by a thread to spin on a mutex after already sleeping on the mutex may be used to regulate the number of threads that are allowed to spin on the mutex.
NATHAN R TALLENT ET AL: "Analyzing lock contention in multithreaded applications", PROCEEDINGS OF THE 15TH ACM SIGPLAN SYMPOSIUM ON PRINCIPLES AND PRACTICE OF PARALLEL PROGRAMMING, ACM, 2 PENN PLAZA, SUITE 701 NEW YORK NY10121-O701 USA, 9 January 2010 (2010-01-09), pages 269-280, XP058344730, DOI: 10.1145/16933453169334893 ISBN: 978-1-60558-877-3 proposes and evaluates three strategies for gaining insight into performance losses due to lock contention.

### SUMMARY

Embodiments of this application provide a multi-thread synchronization method and an electronic device, to help reduce duration for gaining access to a shared resource by a lock thread, reduce a stalling probability of an electronic device, and improve user experience.

According to a first aspect, an embodiment of this application provides a multi-thread synchronization method, specifically including: A first thread requests to obtain a target lock.

That the first thread requests to obtain the target lock includes:
step 1: the first thread obtains a lockword of the target lock, where the lockword includes a lock thread identifier field and a blocked thread quantity field, the lock thread identifier field is used to indicate a thread holding the target lock, and the blocked thread quantity field is used to indicate a quantity of threads in a blocked state for the target lock;
step 2: the first thread checks the lock thread identifier field;
step 3: the first thread checks the blocked thread quantity field if the first thread checks that the lock thread identifier field is a valid thread and is not the first thread;
step 4: the first thread performs spin wait if the first thread checks that the blocked thread quantity field is less than a first threshold; and
step 5: when a quantity of times that the first thread performs spin wait reaches a second threshold, if it is checked that the lock thread identifier field is the valid thread and is not the first thread, the first thread performs an operation of adding 1 to the blocked thread quantity field, and suspends to enter a blocked state.

In this embodiment of this application, the lockword of the target lock includes the lock thread identifier field and the blocked thread quantity field. The blocked thread quantity field is used to indicate the quantity of threads in the blocked state for the target lock. The lock thread does not modify the blocked thread field. Therefore, when the quantity of times that the first thread performs spin wait reaches the second threshold, if it is checked that the lock thread identifier field is another valid thread except the first thread, the first thread does not need to suspend the lock thread, and does not need to allocate a monitor object. The operation of adding 1 to the blocked thread quantity field can be performed. This helps reduce duration for gaining access to a shared resource by the lock thread, reduce a stalling probability of an electronic device, and improve user experience.

In a possible design, after step 3, that the first thread requests to obtain the target lock further includes:
step 6: if the first thread checks that the blocked thread quantity field is greater than or equal to the first threshold, the first thread performs an operation of adding 1 to the blocked thread quantity field, and suspends to enter a blocked state.

In a possible design, the lockword further includes a repeated lock times field, and the repeated lock times field is used to indicate a quantity of times that a lock thread holds the target lock. The lockword can record the quantity of times that the lock thread holds the target lock. This helps reduce a possibility that an exception occurs when the lock thread releases the lock.

In a possible design, after step 2, that the first thread requests to obtain the target lock further includes:
step 7: if the first thread checks that the lock thread identifier field is the first thread, the first thread performs an operation of adding 1 to the repeated lock times field. The repeated lock times field is used to indicate the quantity of times that the lock thread holds the target lock, and the first thread performs the operation of adding 1 to the repeated lock times field, and does not need to allocate the monitor object. This helps improve running efficiency of the first thread, further reduces a stalling probability of the electronic device, and improves user experience.

In a possible design, after step 2, that the first thread requests to obtain the target lock further includes:
step 8: if the first thread checks that the lock thread identifier field is an invalid thread, the first thread sets the lock thread identifier field to the first thread, and sets the repeated lock times field to an initial value.

In a possible design, the method further includes: The first thread requests to release the target lock.

That the first thread requests to release the target lock includes:
step 9: the first thread obtains the lockword of the target lock;
step 10: the first thread checks the lock thread identifier field;
step 11: the first thread checks the repeated lock times field if the first thread checks that the lock thread identifier field is the first thread; and
step 12: if the first thread checks that the repeated lock times field is not 0, the first thread performs an operation of subtracting 1 from the repeated lock times field.

The technical solution helps simplify a process in which the first thread requests to release the target lock.

In a possible design, after step 12, that the first thread requests to release the target lock further includes:
step 13: the first thread sets the lock thread identifier field to an invalid thread if the first thread checks that the repeated lock times field is 0;
step 14: the first thread checks the blocked thread quantity field; and
step 15: the first thread wakes up at least one of the threads in the blocked state for the target lock if the first thread checks that the blocked thread quantity field is not 0.

After releasing a control right for the target lock, the first thread may further wake up the at least one of the threads in the blocked state for the target lock. This improves a possibility that the thread holds the target lock, and improves thread running efficiency.

In a possible design, the method further includes: the first thread requests to terminate holding the target lock.

That the first thread requests to terminate holding the target lock includes:
step 16: the first thread obtains the lockword of the target lock;
step 17: the first thread checks the lock thread identifier field;
step 18: the first thread stores the lock repeated lock times field as context of the first thread for the target lock if the first thread checks that the lock thread identifier field is the first thread;
step 19: the first thread adds a thread identifier ID of the first thread to a thread waiting list corresponding to an ID of the target lock; and
step 20: the first thread sets the repeated lock times field to 0, sets the lock thread identifier field to an invalid thread, and suspends to enter a blocked state.

In this embodiment of this application, the first thread can add the thread ID of the first thread to the thread waiting list corresponding to the ID of the target lock, so that the first thread can be easily woken up by another thread or a system.

In a possible design, after step 20, that the first thread requests to terminate holding the target lock further includes:
step 21: the first thread obtains a lockword of the target lock after being woken up;
step 22: the first thread checks the lock thread identifier field;
step 23: if the first thread checks that the lock thread identifier field is the invalid thread, the first thread sets the lock thread identifier field to the first thread, and sets the repeated lock times field based on the context of the first thread for the target lock; and
step 24: the first thread deletes the thread ID of the first thread from the thread waiting list corresponding to the ID of the target lock.

According to the technical solution, when the first thread requests to terminate holding the target lock, if being woken up again, the first thread can recover holding the target lock.

In a possible design, the first thread may be woken up in the following manner to obtain the lockword of the target lock:

The first thread obtains the lockword of the target lock after being woken up by a second thread, where the second thread wakes up the first thread when the thread waiting list corresponding to the ID of the target lock stores the thread ID of the first thread, and the second thread and the first thread belong to a same process; or
the first thread obtains the lockword of the target lock after being woken up by a system when suspension duration of the first thread exceeds a third threshold.

This helps simplify a manner in which the first thread is woken up when the first thread requests to terminate holding the target lock.

In a possible design, the blocked thread quantity field includes a first value and a blocked thread quantity high-order identifier, the first value is a low-order value corresponding to the quantity of threads in the blocked state for the target lock, the blocked thread quantity high-order identifier is used to indicate whether a blocked thread quantity high-order list stores a second value corresponding to the ID of the target lock, and the second value is a high-order value corresponding to the quantity of threads in the blocked state for the target lock. This helps avoid overflowing because there are excessively many threads in the blocked state for the target lock.

In a possible design, the repeated lock times field includes a third value and a repeated lock times high-order identifier, the third value is a low-order value corresponding to the quantity of times that the lock thread holds the target lock, the repeated lock times high-order identifier is used to indicate whether a repeated lock times high-order list stores a fourth value corresponding to the ID of the target lock and the thread ID of the lock thread, and the fourth value is a high-order value corresponding to the quantity of times that the lock thread holds the target lock. This helps avoid overflowing because the excessively high quantity of times that the lock thread holds the target lock.

In a possible design, the first thread may suspend to enter a blocked state in the following manner:

The first thread performs a system call to set a state of the first thread to a sleep state and add the first thread to a waiting queue corresponding to an address of the target lock. This helps simplify the implementation.

According to a second aspect, an embodiment of this application provides an electronic device. The electronic device specifically includes a processor and a memory. The memory stores program instructions. The processor invokes the program instructions stored in the memory for a first thread to request to obtain a target lock.

That the first thread requests to obtain the target lock includes:
step 1: the first thread obtains a lockword of the target lock, where the lockword includes a lock thread identifier field and a blocked thread quantity field, the lock thread identifier field is used to indicate a thread holding the target lock, and the blocked thread quantity field is used to indicate a quantity of threads in a blocked state for the target lock;
step 2: the first thread checks the lock thread identifier field;
step 3: the first thread checks the blocked thread quantity field if the first thread checks that the lock thread identifier field is a valid thread and is not the first thread;
step 4: the first thread performs spin wait if the first thread checks that the blocked thread quantity field is less than a first threshold; and
step 5: when a quantity of times that the first thread performs spin wait reaches a second threshold, if it is checked that the lock thread identifier field is the valid thread and is not the first thread, the first thread performs an operation of adding 1 to the blocked thread quantity field, and suspends to enter a blocked state.

In a possible design, after step 3, that the first thread requests to obtain the target lock further includes:
step 6: if the first thread checks that the blocked thread quantity field is greater than or equal to the first threshold, the first thread performs an operation of adding 1 to the blocked thread quantity field, and suspends to enter a blocked state.

In a possible design, the lockword further includes a repeated lock times field, and the repeated lock times field is used to indicate a quantity of times that a lock thread holds the target lock.

In a possible design, after step 2, that the first thread requests to obtain the target lock further includes:
step 7: if the first thread checks that the lock thread identifier field is the first thread, the first thread performs an operation of adding 1 to the repeated lock times field.

In a possible design, after step 2, that the first thread requests to obtain the target lock further includes:
step 8: if the first thread checks that the lock thread identifier field is an invalid thread, the first thread sets the lock thread identifier field to the first thread, and sets the repeated lock times field to an initial value.

In a possible design, the processor further invokes the program instructions for the first thread to request to release the target lock:
That the first thread requests to release the target lock includes:
step 9: the first thread obtains the lockword of the target lock;
step 10: the first thread checks the lock thread identifier field;
step 11: the first thread checks the repeated lock times field if the first thread checks that the lock thread identifier field is the first thread; and
step 12: if the first thread checks that the repeated lock times field is not 0, the first thread performs an operation of subtracting 1 from the repeated lock times field.

In a possible design, after step 12, that the first thread requests to release the target lock further includes:
step 13: the first thread sets the lock thread identifier field to an invalid thread if the first thread checks that the repeated lock times field is 0;
step 14: the first thread checks the blocked thread quantity field; and
step 15: the first thread wakes up at least one of the threads in the blocked state for the target lock if the first thread checks that the blocked thread quantity field is not 0.

In a possible design, the processor further invokes the program instructions for the first thread to request to terminate holding the target lock.

That the first thread requests to terminate holding the target lock includes:
step 16: the first thread obtains the lockword of the target lock;
step 17: the first thread checks the lock thread identifier field;
step 18: the first thread stores the lock repeated lock times field as context of the first thread for the target lock if the first thread checks that the lock thread identifier field is the first thread;
step 19: the first thread adds a thread identifier ID of the first thread to a thread waiting list corresponding to an ID of the target lock; and
step 20: the first thread sets the repeated lock times field to 0, sets the lock thread identifier field to an invalid thread, and suspends to enter a blocked state.

In a possible design, after step 20, that the first thread requests to terminate holding the target lock further includes:
step 21: the first thread obtains a lockword of the target lock after being woken up;
step 22: the first thread checks the lock thread identifier field;
step 23: if the first thread checks that the lock thread identifier field is the invalid thread, the first thread sets the lock thread identifier field to the first thread, and sets the repeated lock times field based on the context of the first thread for the target lock; and
step 24: the first thread deletes the thread ID of the first thread from the thread waiting list corresponding to the ID of the target lock.

In a possible design, the first thread may be woken up in the following manner to obtain the lockword of the target lock:

The first thread obtains the lockword of the target lock after being woken up by a second thread, where the second thread wakes up the first thread when the thread waiting list corresponding to the ID of the target lock stores the thread ID of the first thread, and the second thread and the first thread belong to a same process; or
the first thread obtains the lockword of the target lock after being woken up by a system when suspension duration of the first thread exceeds a third threshold.

In a possible design, the blocked thread quantity field includes a first value and a blocked thread quantity high-order identifier, the first value is a low-order value corresponding to the quantity of threads in the blocked state for the target lock, the blocked thread quantity high-order identifier is used to indicate whether a blocked thread quantity high-order list stores a second value corresponding to the ID of the target lock, and the second value is a high-order value corresponding to the quantity of threads in the blocked state for the target lock.

In a possible design, the repeated lock times field includes a third value and a repeated lock times high-order identifier, the third value is a low-order value corresponding to the quantity of times that the lock thread holds the target lock, the repeated lock times high-order identifier is used to indicate whether a repeated lock times high-order list stores a fourth value corresponding to the ID of the target lock and the thread ID of the lock thread, and the fourth value is a high-order value corresponding to the quantity of times that the lock thread holds the target lock.

In a possible design, the first thread may suspend to enter the blocked state in the following manner:

The first thread performs a system call to set a state of the first thread to a sleep state and add the first thread to a waiting queue corresponding to an address of the target lock.

According to a third aspect, an embodiment of this application provides an electronic device, including an apparatus for performing the method according to any one of the first aspect or the possible designs of the first aspect in the embodiments of this application.

According to a fourth aspect, an embodiment of this application provides a chip, including a processor and an interface, configured to invoke, from a memory, program instructions stored in the memory and run the program instructions, to perform the method according to any one of the first aspect or the possible designs of the first aspect in the embodiments of this application.

According to a fifth aspect, an embodiment of this application provides a computer-readable storage medium. The computer-readable storage medium stores program instructions, and when the program instructions are run on an electronic device, the electronic device is enabled to perform the method according to any one of the first aspect and the possible designs of the first aspect in the embodiments of this application.

According to a sixth aspect, an embodiment of this application provides a computer program product. When the computer program product runs on an electronic device, the electronic device is enabled to perform the method according to the first aspect and any possible design of the first aspect in the embodiments of this application.

In addition, for technical effects brought by any possible design in the second aspect to the sixth aspect, refer to technical effects brought by different designs in the method part. Details are not described herein again.

### BRIEF DESCRIPTION OF DRAWINGS

FIG. 1 is a schematic diagram of a format of a lockword according to an embodiment of this application;
FIG. 2 is a schematic diagram of a hardware structure of an electronic device according to an embodiment of this application;
FIG. 3 is a schematic diagram of a software structure of an electronic device according to an embodiment of this application;
FIG. 4 is a schematic diagram of a storage format of a high-order value corresponding to blocked thread quantity according to an embodiment of this application;
FIG. 5 is a schematic diagram of a storage format of a high-order value corresponding to repeated lock times according to an embodiment of this application;
FIG. 6 is a schematic diagram of another format of a lockword according to an embodiment of this application;
FIG. 7 is a schematic diagram of a storage format of hashcode according to an embodiment of this application;
FIG. 8 is a schematic flowchart of a multi-thread synchronization method according to an embodiment of this application;
FIG. 9 is a schematic flowchart of an operation of adding 1 to a blocked thread quantity field according to an embodiment of this application;
FIG. 10 is a schematic flowchart of an operation of adding 1 to a repeated lock times field according to an embodiment of this application;
FIG. 11A and FIG. 11B are a schematic flowchart of another multi-thread synchronization method according to an embodiment of this application;
FIG. 12 is a schematic flowchart of an operation of subtracting 1 from a repeated lock times field according to an embodiment of this application;
FIG. 13 is a schematic flowchart of another multi-thread synchronization method according to an embodiment of this application;
FIG. 14 is a schematic diagram of a storage format of a thread waiting list according to an embodiment of this application;
FIG. 15 is a schematic flowchart of deleting a thread ID from a thread waiting list according to an embodiment of this application;
FIG. 16 is a schematic flowchart of another multi-thread synchronization method according to an embodiment of this application;
FIG. 17 is a schematic flowchart of another multi-thread synchronization method according to an embodiment of this application;
FIG. 18 is a schematic diagram of another format of a lockword according to an embodiment of this application; and
FIG. 19 is a schematic diagram of a structure of another electronic device according to an embodiment of this application.

### DESCRIPTION OF EMBODIMENTS

It should be understood that, in embodiments of this application, "at least one" means one or more, and "a plurality of" means two or more. The term "and/or" describes only an association relationship for describing associated objects and represents that three relationships may exist. For example, A and/or B may represent the following three cases: Only A exists, both A and B exist, and only B exists. A and B may be singular or plural. The character "/" usually indicates an "or" relationship between associated objects. "At least one of the following" or a similar expression thereof indicates any combination of the following items, and includes any combination of one or more of the following. For example, at least one of a, b, or c may represent seven cases a, b, c, a and b, a and c, b and c, and a, b and c, where each of a, b, and c may be an element, or may be a set including one or more elements.

In this application, the term "example", "in some embodiments", "in some other embodiments", or the like is used to represent an example, an illustration, or a description. Any embodiment or design scheme described as an "example" in this application should not be explained as being more preferred or having more advantages than another embodiment or design scheme. Exactly, the term "example" is used to present a concept in a specific manner.

It should be noted that, in the embodiments of this application, the terms "first", "second", and the like are only used for a purpose of description, but should not be understood as an indication or implication of relative importance or an indication or implication of a sequence.

An electronic device executes a corresponding program by using an operating system (for example, an Android operating system), so that a user can use the electronic device to make a call, send an SMS message, browse a web page, take a photo, play a game, watch a video, and the like. Generally, a thread (thread) is the smallest unit of program execution. Currently, the operating system of the electronic device may support multi-thread running, so as to implement parallel processing of a plurality of tasks, and improve task processing efficiency. However, a shared resource (for example, shared code, a shared memory, shared data, or a shared variable) can be accessed by a plurality of threads in the Android operating system. A lock is used to protect the shared resource, to prevent the plurality of threads from gaining access to the resource at the same time. For example, a lock 1 is used to protect a shared resource 1. Only a thread of the plurality of threads that holds the lock 1 can gain access to the shared resource 1. Once a thread holds the lock 1, another thread cannot hold the lock 1. The another thread can obtain an opportunity to hold the lock 1 only after the lock thread releases the lock 1.

A thread contends for and holds a lock according to a lock coarsening policy in the conventional technology. Specifically, the thread contends for and holds the lock based on a lockword (lockword). In other words, the thread determines, based on the lockword, whether the lock 1 can be held.

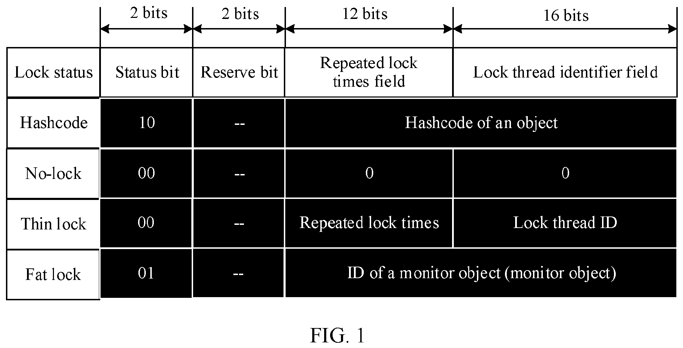

For example, in an Android operating system, a format of a lockword is shown in FIG. 1, and the lockword includes a status bit, a reserve (reserve) bit, a repeated lock times field, and a lock thread identifier field. The status bit is used to indicate a lock status. Information indicated by the repeated lock times field and the lock thread identifier field in the lockword is related to the lock status. For example, when the status bit is set to 01, it indicates a fat lock state, and when the status bit is set to 01, the repeated lock times field and the lock thread identifier field are used to indicate a monitor object; and when the status bit is 00, it indicates a thin lock state, and when the status bit is set to 00, the repeated lock times field is used to indicate a quantity of times for which a lock thread holds a lock, and the lock thread identifier field is used to indicate the lock thread of the lock.

For example, a thread 1 requests to obtain a lock 1. That the thread 1 requests to obtain the lock 1 specifically includes the following steps:
First, the thread 1 gets a lockword.

Second, the thread 1 checks a lock thread identifier field.

In one case, if the thread 1 checks that the lock thread identifier field is another thread except the thread 1, the thread 1 continues to check a status bit.

If the thread 1 checks that the status bit is in a fat lock state, the thread 1 suspends to enter a blocked state.

If the thread 1 checks that the status bit is in a thin lock state, spin wait is performed. When a quantity of times for the spin wait reaches a specific threshold, if it is checked that the lock thread identifier field is still another thread except the thread 1, the thread 1 suspends the thread holding the lock 1, allocates a monitor object, sets the status bit to a fat lock state, wakes up the thread holding the lock 1, and then the thread 1 suspends to enter the blocked state.

In another case, if the thread 1 checks that the lock thread identifier field is the thread 1, the thread 1 performs an operation of adding 1 to a repeated lock times field. If checking that the repeated lock times field reaches a threshold, the thread 1 allocates the monitor object and sets the status bit to a fat lock state.

In another case, if the thread 1 checks that the lock thread identifier field is an invalid thread, that is, no thread holds the lock 1, the thread 1 sets the identifier field in the lock status to a first thread, and initializes a repeated lock times field.

It can be learned from the foregoing content that, when the thread requests, based on the lockword shown in FIG. 1, to obtain the lock or to hold the lock, because both the lock thread and a non-lock thread can operate the status bit, when the status bit is in the thin lock state, if the non-lock thread needs to modify the status bit, the non-lock thread needs to suspend the lock thread and then wake up the lock thread after the status bit is modified, to prevent the lock thread from modifying the status bit as well. In addition, regardless of whether the lock thread or the non-lock thread modifies the status bit from the thin lock state to the fat lock state, the monitor object needs to be allocated. As a result, the conventional mechanism in which the thread determines, based on the lockword, whether the lock can be held easily increases duration for gaining access to a shared resource by the lock thread, increases a response delay of an application in which the lock thread is located in an electronic device, increases a stalling probability of the electronic device, and reduces user experience.

In view of this, the embodiments of this application provide a multi-thread synchronization method. A lockword (lockword) is redefined, so that the lockword includes a lock thread identifier field, a repeated lock times field, and a blocked thread quantity field. The lock thread identifier field is used to indicate a thread holding a target lock. The repeated lock times field is used to indicate a quantity of times that a lock thread holds the target lock. The blocked thread quantity field is used to indicate a quantity of threads in a blocked state for the target lock. Because the lock thread identifier field and the repeated lock times field are set only by a lock thread, and the blocked thread quantity field is set only by a non-lock thread, when spin wait of the non-lock thread reaches a specific threshold, if it is checked that the lock thread identifier field indicates another thread, the non-lock thread performs an operation of adding 1 to the blocked thread quantity field, and suspends to enter a blocked state. Compared with the conventional technology, the solution has the following advantages: There is no need to suspend the lock thread first, and no need to allocate a monitor object. The operation of adding 1 to the blocked thread quantity field is performed. This reduces duration for gaining access to a shared resource by the lock thread, reduces a stalling probability of an electronic device, and improves user experience.

For example, the electronic device in the embodiments of this application may be a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in the embodiments of this application.

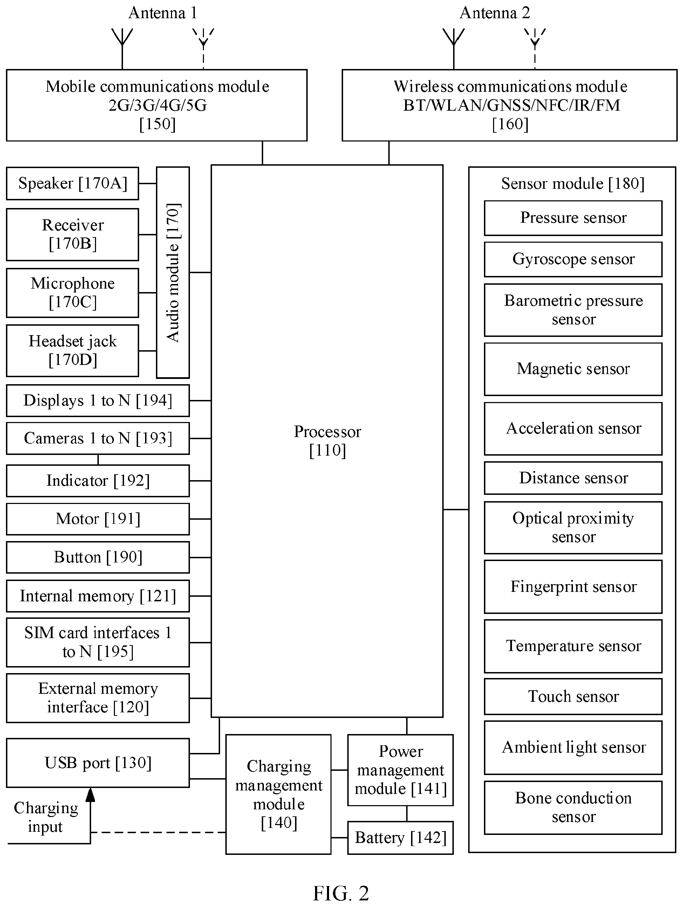

For example, FIG. 2 is a schematic diagram of a structure of an electronic device according to an embodiment of this application. Specifically, as shown in the figure, the electronic device includes a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 110 may include one or more processing units. For example, the processor 110 may include an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or two or more different processing units may be integrated into one component.

The controller may be a nerve center and a command center of the electronic device. The controller may generate an operation control signal based on instruction operation code and a time sequence signal, to complete control of instruction fetching and instruction execution.

A memory may further be disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. For example, the processor 110 includes a universal serial bus (universal serial bus, USB) port 130, and a subscriber identity module (subscriber identity module, SIM) interface 195. For another example, the processor 110 may further include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and/or the like.

It may be understood that, an interface connection relationship between the modules shown in this embodiment of this application is merely an example for description, and does not constitute a structural limitation on the electronic device. In some other embodiments of this application, the electronic device may alternatively use an interface connection manner different from that in the foregoing embodiment, or a combination of a plurality of interface connection manners.

The USB port 130 is a port that conforms to a USB standard specification, and may be specifically a mini USB port, a micro USB port, a USB type-C port, or the like. The USB port 130 may be configured to connect to a charger to charge the electronic device, or may be configured to transmit data between the electronic device and a peripheral device. The USB port 130 may alternatively be configured to connect to a headset, to play audio by using the headset. Alternatively, the port may be configured to connect to another electronic device, for example, an AR device.

The SIM card interface 195 is configured to connect to a SIM card. The SIM card may be inserted into the SIM card interface 195 or removed from the SIM card interface 195, to come into contact with or be separated from the electronic device. The electronic device may support one or N SIM card interfaces, where N is a positive integer greater than 1. The SIM card interface 195 can support a nano-SIM card, a micro-SIM card, a SIM card, and the like. A plurality of cards may be inserted into a same SIM card interface 195 at the same time. The plurality of cards may be of a same type or of different types. The SIM card interface 195 may also be compatible with different types of SIM cards. The SIM card interface 195 may also be compatible with an external storage card. The electronic device interacts with a network by using the SIM card, to implement functions such as calling and data communication. In some embodiments, the electronic device uses an eSIM, namely, an embedded SIM card. The eSIM card may be embedded into the electronic device, and cannot be separated from the electronic device.

The charging management module 140 is configured to receive a charging input from the charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device. When charging the battery 142, the charging management module 140 may further supply power to the electronic device by using the power management module 141.

The power management module 141 is configured to connect to the battery 142, the charging management module 140, and the processor 110. The power supply management module 141 receives an input of the battery 142 and/or the charging management module 140, and supplies power for the processor 110, the internal memory 121, an external memory, the display 194, the camera 193, the wireless communications module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device may be implemented through the antenna 1, the antenna 2, the mobile communications module 150, the wireless communications module 160, the modem, the baseband processor, and the like.

The antenna 1 and the antenna 2 are configured to transmit and receive electromagnetic wave signals. Each antenna of the electronic device may be configured to cover one or more communication frequency bands. Different antennas may further be multiplexed, to improve antenna utilization. For example, the antenna 1 may be multiplexed as a diversity antenna in a wireless local area network. In some other embodiments, an antenna may be used in combination with a tuning switch.

The mobile communications module 150 may provide a solution that is applied to the electronic device and that is for wireless communication including formats such as 2G/3G/4G/5G. The mobile communications module 150 may include at least one filter, a switch, a power amplifier, a low noise amplifier (low noise amplifier, LNA), and the like.

The wireless communications module 160 may provide a solution that is applied to the electronic device and that is for wireless communication such as a wireless local area network (wireless local area networks, WLAN) (for example, a Wi-Fi network), Bluetooth (Bluetooth, BT), a global navigation satellite system (global navigation satellite system, GNSS), frequency modulation (frequency modulation, FM), near field communication (near field communication, NFC), or an infrared (infrared, IR) technology.

In some embodiments, in the electronic device, the antenna 1 and the mobile communications module 150 are coupled, and the antenna 2 and the wireless communications module 160 are coupled, so that the electronic device can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 194, the application processor, and the like. The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, quantum dot light emitting diodes (quantum dot light emitting diodes, QLED), or the like. In some embodiments, the electronic device may include one or N displays 194, where N is a positive integer greater than 1.

The electronic device can implement a photographing function by using the ISP, the camera 193, the video codec, the GPU, the display 194, the application processor, and the like. The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV In some embodiments, the electronic device may include one or N cameras 193, where N is a positive integer greater than 1.

The external memory interface 120 may be configured to connect to an external memory card, for example, a micro SD card, to extend a storage capability of the electronic device. The external storage card communicates with the processor 110 through the external memory interface 120, to implement a data storage function. For example, a file such as music or a video is stored in the external storage card.

The internal memory 121 includes a running memory (memory) and a built-in memory. The running memory may be configured to store computer-executable program code, data, or the like. The executable program code includes instructions. The processor 110 runs the instructions stored in the running memory, to perform various function applications of the electronic device and data processing. For example, the running memory may include a high speed random access memory. The built-in memory may also be referred to as a built-in external memory or the like, and may be configured to store a program and/or data. For example, the built-in memory may store an operating system, an application, and the like. Generally, after the electronic device loads the program and/or data in the built-in memory to the running memory, the processor 110 runs the corresponding program and/or data to implement a corresponding function. In addition, the internal memory 121 may include a nonvolatile memory, for example, at least one magnetic disk storage device, a flash memory, and a universal flash storage (universal flash storage, UFS).

The electronic device may implement an audio function, for example, music playing and recording, by using the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch button. The electronic device may receive a button input, and generate a button signal input related to user settings and function control of the electronic device.

The motor 191 may generate a vibration prompt. The motor 191 may be configured to provide an incoming call vibration prompt or a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may further be customized.

The indicator 192 may be an indicator light that may be configured to indicate a charging state and a battery power change, and may further be configured to indicate a message, a missed call, a notification, and the like.

It may be understood that the structure shown in this embodiment of this application does not constitute a specific limitation on the electronic device. In some other embodiments of this application, the electronic device may include more or fewer components than those shown in the figure, or some components may be combined, or some components may be split, or there may be a different component layout. The components shown in the figure may be implemented by hardware, software, or a combination of software and hardware.

A software system of the electronic device in the embodiments of this application may also be referred to as an operating system supporting multi-thread running, and may use a hierarchical architecture, an event-driven architecture, a microkernel architecture, a micro service architecture, or a cloud architecture. In the layered architecture (for example, an Android operating system), software is divided into several layers, and each layer has a clear role and task. Layers communicate with each other through a software interface.

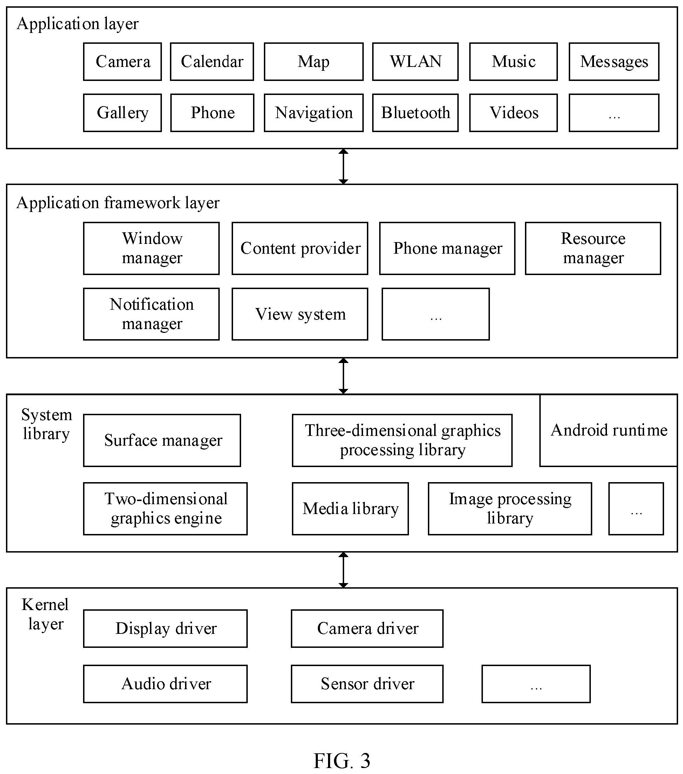

Specifically, FIG. 3 is a block diagram of a structure of a software system of an electronic device according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 3, the application packages may include applications such as "Camera", "Gallery", "Calendar", "Phone", "Map", "Navigation", "WLAN", "Bluetooth", "Music", "Videos", and "Messages".

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, an address book, and the like.

The view system includes visual controls, such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function of the electronic device 100, for example, management of a call status (including answering, declining, or the like).

The resource manager provides various resources for an application, such as a localized character string, an icon, an image, a layout file, and a video file.

The notification manager enables an application to display notification information in a status bar, and may be configured to convey a notification type message. The displayed notification information may automatically disappear after a short pause without user interaction. For example, the notification manager is configured to: notify download completion, provide a message notification, and the like. The notification manager may alternatively be a notification that appears in a top status bar of the system in a form of a graph or a scroll bar text, for example, a notification of an application running in the background or a notification that appears on a screen in a form of a dialog window. For example, text information is displayed in the status bar, an announcement is given, the electronic device vibrates, or an indicator light blinks.

The Android runtime includes a kernel library and a virtual machine (the virtual machine can be a Java virtual machine, for example, the Dalvik virtual machine). The Android runtime is responsible for scheduling and management of the Android system.

The kernel library includes two parts: a function that needs to be invoked in Java language and a kernel library of Android.

The application layer and the application framework layer run on the virtual machine. The virtual machine translates Java bytecode (bytecode) at the application layer and the application framework layer into a binary execution file. The virtual machine is configured to implement functions such as object lifecycle management, stack management, thread management, security and exception management, and garbage collection. For example, the multi-thread access method in the embodiments of this application is executed by using the virtual machine. When the software architecture shown in FIG. 3 is an Android operating system, the virtual machine may be Dalvik/ART, HUAWEI Maple, or the like. When the software architecture shown in FIG. 3 is an operating system such as Linux or Windows, the virtual machine may be an openJDK virtual machine.

It should be noted that the virtual machine may be created when an application is started, or may be preinstalled. This is not limited. For example, in an Android operating system, the virtual machine may be created when an application is started. For another example, in a Windows operating system, the virtual machine may be installed on the electronic device by a user according to a requirement of the user.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of frequently used audio and video formats, static image files, and the like. The media library may support a plurality of audio and video encoding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Some terms in the embodiments of this application are explained first, to facilitate understanding of a person skilled in the art.
1. Lock A lock in the embodiments of this application is used to protect a shared resource from being accessed by a plurality of threads at the same time. The shared resource, for example, a memory, code, a variable, or data, in the embodiments of this application may be accessed by the plurality of threads. This is not limited. For example, the lock may be an object (object, obj) or a part of the object. The object is used to protect the shared resource, and is an instance of a class, where the class is a template and describes behavior and a status of a class of object. For another example, the lock may alternatively be an address, or another uniquely determined parameter and structure.
2. Lockword (lockword) In the embodiments of this application, a lockword includes a lock thread identifier field, a repeated lock times field, and a blocked thread quantity field, and may have 32 bits or 64 bits. A quantity of bits of the lockword is not limited in the embodiments of this application. Further, in some other embodiments, the lockword may further include a reserve bit, so as to facilitate subsequent function or operation extension.

Specifically, the lockword is in a one-to-one correspondence with the lock, and different locks have different lockwords. A lockword of a target lock is used as an example.

A lock thread identifier field is used to indicate a thread holding the target lock. A first thread is used as an example. The first thread may set the lock thread identifier field to the first thread, so as to obtain the target lock. Specifically, the first thread may set the lock thread identifier field to the first thread through setting the lock thread identifier field to a thread ID of the first thread.

A blocked thread quantity field is used to indicate a quantity of threads in a blocked state for the target lock.

Further, in some embodiments, the blocked thread quantity field includes a first value and a blocked thread quantity high-order identifier. The first value is a low-order value corresponding to the quantity of threads in the blocked state for the target lock, and the blocked thread quantity high-order identifier is used to indicate whether a blocked thread quantity high-order list stores a second value corresponding to an ID of the target lock. The second value is a high-order value corresponding to the quantity of threads in the blocked state for the target lock. This helps avoid overflowing because there are excessively many threads in the blocked state for the target lock. For example, when the blocked thread quantity high-order identifier is a valid identifier, it indicates that the blocked thread quantity high-order list stores the second value corresponding to the ID of the target lock. When the blocked thread quantity high-order identifier is an invalid identifier, it indicates that the blocked thread quantity high-order list does not store the second value corresponding to the ID of the target lock, or that the second value corresponding to the ID of the target lock is 0. For example, the blocked thread quantity high-order identifier is the valid identifier when the blocked thread quantity high-order identifier is set to 1. For another example, the blocked thread quantity high-order identifier is the invalid identifier when the blocked thread quantity high-order identifier is set to 0.

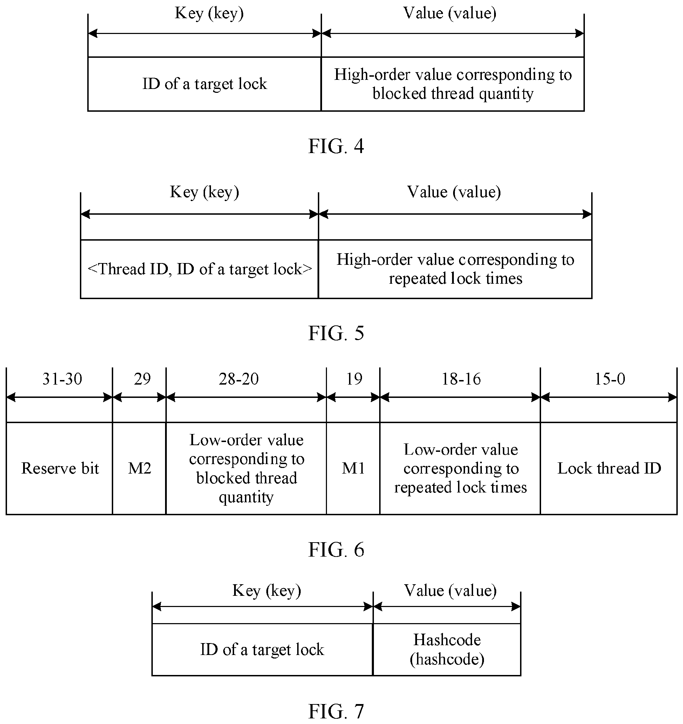

For example, the blocked thread quantity high-order list may be a global variable, and is stored in an electronic device in a form of a map. A second value corresponding to an ID of a target lock is used as an example. A format of the second value corresponding to the ID of the target lock stored in a blocked thread quantity high-order list is shown in FIG. 4. The ID of the target lock is key, and the second value is value. Therefore, a thread requesting to obtain the target lock can index the second value from the blocked thread quantity high-order list by using the ID of the target lock.

A repeated lock times field is used to indicate a quantity of times that a lock thread holds the target lock. Specifically, in the embodiments of this application, the lock thread may set the repeated lock times field to the quantity of times that the lock thread repeatedly holds the target lock, so as to indicate the quantity of times that the lock thread holds the target lock. Alternatively, the repeated lock times field may be directly set to the quantity of times that the lock thread holds the target lock. For example, when the quantity of times that the lock thread holds the target lock is 1, and the quantity of times that the lock thread repeatedly holds the target lock is 0, the lock thread may set the repeated lock times field to 0 or 1, to indicate that the quantity of times that the lock thread holds the target lock is 1. In addition, in some embodiments, the lock thread may set the repeated lock times field to none, so as to indicate that the quantity of times that the lock thread holds the target lock is 0. Alternatively, the lock thread may set the repeated lock times field to a specific symbol or value, so as to indicate that the quantity of times that the lock thread holds the target lock is 0. For example, when the lock thread directly sets the repeated lock times field to the quantity of times that the lock thread holds the target lock, the lock thread may set the repeated lock times field to 0, so as to indicate that the quantity of times that the lock thread holds the target lock is 0. For another example, when the lock thread sets the repeated lock times field to the quantity of times that the lock thread repeatedly holds the target lock, the lock thread may set the repeated lock times field to none, so as to indicate that the quantity of times that the lock thread holds the target lock is 0.

Further, in some embodiments, the repeated lock times field includes a third value and a repeated lock times high-order identifier. The third value is a low-order value corresponding to the quantity of times that the lock thread holds the target lock, and the repeated lock times high-order identifier is used to indicate whether a repeated lock times high-order list stores a fourth value corresponding to the ID of the target lock and a thread ID of the lock thread. The fourth value is a high-order value corresponding to the quantity of times that the lock thread holds the target lock. This helps avoid overflowing because the excessively high quantity of times that the lock thread holds the target lock. For example, when the repeated lock times high-order identifier is a valid identifier, it indicates that the repeated lock times high-order list stores the fourth value corresponding to the ID of the target lock and the thread ID of the lock thread. When the repeated lock times high-order identifier is an invalid identifier, it indicates that the repeated lock times high-order list does not store the fourth value corresponding to the ID of the target lock and the thread ID of the lock thread, or that the fourth value corresponding to the ID of the target lock and the thread ID of the lock thread is 0. For example, the repeated lock times high-order identifier is the valid identifier when the repeated lock times high-order identifier is set to 1. For another example, the repeated lock times high-order identifier is the invalid identifier when the repeated lock times high-order identifier is set to 0.

For example, the repeated lock times high-order list may be a global variable, and is stored in an electronic device in a form of a map. A fourth value corresponding to an ID of a target lock and a thread ID of a lock thread as an example. A format of the fourth value corresponding to the ID of the target lock and the thread ID of the lock thread stored in a repeated lock times high-order list is shown in FIG. 5. The ID of the target lock and the thread ID of the lock thread are key, and the fourth value is value. Therefore, a thread requesting to re-obtain the target lock can index the fourth value from the repeated lock times high-order list by using the ID of the target lock and the thread ID.

For example, when a lockword has 32 bits, the lockword of a target lock may be shown in FIG. 6, and includes a lock thread identifier field, a repeated lock times field, a blocked thread quantity field, and a reserve bit. The repeated lock times field includes a Counter field and an M1 field, and the blocked thread quantity field includes a WaitNum field and an M2 field. The Counter field is used to set a first value, and the M1 field is used to set a repeated lock times high-order identifier. The WaitNum field is used to set a third value, and the M2 field is used to set a blocked thread quantity high-order identifier.

As shown in FIG. 6, first 16 bits (namely, bits 0 to 15) of the lockword correspond to the lock thread identifier field, and bits 16 to 18 of the lockword correspond to the Counter field. Bit 19 of the lockword corresponds to the M1 field. Bits 20 to 28 of the lockword correspond to the WaitNum field, and bits 30 and 31 correspond to the reserve bit. It should be noted that the reserve bit may not be set in the lockword. Alternatively, a quantity of bits and the like corresponding to each field in the lockword are set according to an actual requirement.

It should be noted that FIG. 6 is merely an example of a format of the lockword of the target lock, and does not constitute a limitation on the format of the lockword. For example, in this embodiment of this application, the quantity of bits corresponding to each field in the lockword may further be set according to an actual requirement.

In addition, in some other embodiments, hashcode (hashcode) of the target lock is used to indicate whether the target lock exists. For example, the target lock is an object. The hashcode of the target lock is stored in memory space that has a negative offset of 9 bits from an address in an object header of the object. Alternatively, when memory space used to store an address of the lockword of the target lock corresponds to empty, an electronic device may store the hashcode of the target lock in the corresponding memory space used to store the address of the lockword of the target lock. This helps appropriately utilize the memory space. Further, the hashcode of the target lock may be stored in a form of a map in this embodiment of this application. For example, a storage format of hashcode of a target lock may be shown in FIG. 7. An ID of the target lock is key, and the hashcode is value. Specifically, the thread can index the hashcode of the target lock by using the ID of the target lock.

The multi-thread synchronization method in the embodiments of this application is described in detail by using the electronic device having the structures shown in FIG. 2 and FIG. 3 as an example.

Example 1: A first thread requests to obtain a target lock. That the first thread requests to obtain the target lock may be understood as: The first thread requests to hold the target lock. In some embodiments, when the first thread runs a function or a program instruction that requests to obtain and hold the target lock, execution of a process in which the first thread requests to obtain the target lock is triggered. For example, the function or the program instruction that requests to obtain and hold the target lock is MonitorEnter.

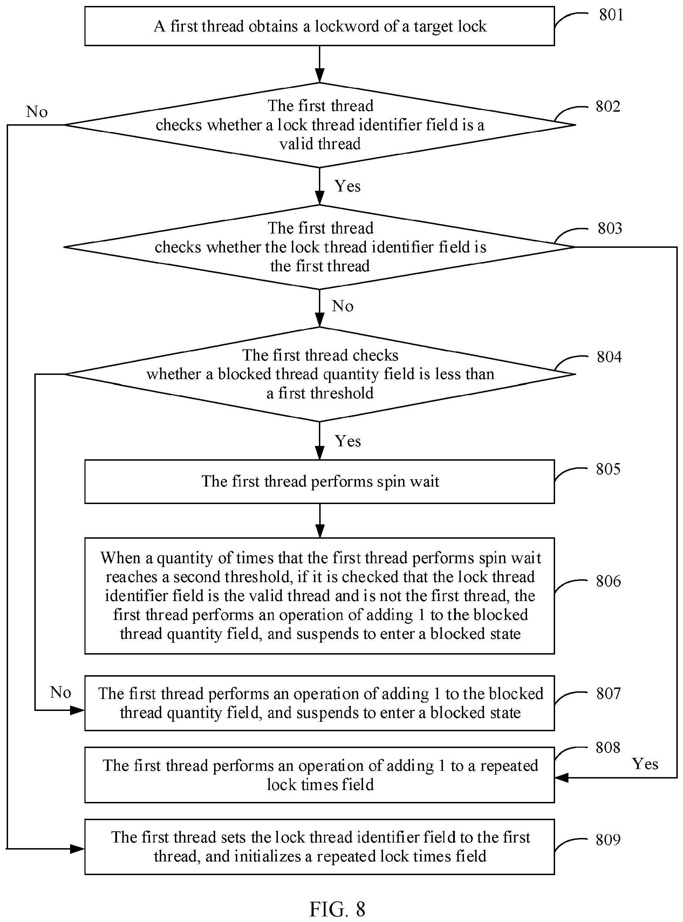

For example, that a first thread requests to obtain a target lock includes the following steps, which are specifically shown in FIG. 8.

Step 801: The first thread obtains a lockword of the target lock.

For example, the first thread obtains the lockword of the target lock based on an address of the target lock. For example, when the lockword has 32 bits, the address of the target lock may correspond to a forward offset of 4 bytes from an address of an object header of an object in which the target lock is located.

Step 802: The first thread checks whether a lock thread identifier field is a valid thread, that is, the first thread determines whether the lock thread identifier field is set to a valid thread; and if the lock thread identifier field is the valid thread, performs step 803; otherwise, performs step 809.

It should be noted that the lock thread identifier field is not the valid thread, which is equivalent to that the lock thread identifier field is an invalid thread.

Specifically, that the lock thread identifier field is set to the valid thread may be understood as: A thread ID set in the lock thread identifier field is a valid value. For example, if [1, 1000] is the valid value of the thread ID, the thread ID set in the lock thread identifier field is in [1, 1000], that is, the lock thread identifier field is set to the valid thread. It may be understood that, when the thread ID set in the lock thread identifier field is not the valid value, it may be understood that the lock thread ID is set to an invalid thread. For example, if the thread ID set in the lock thread identifier field is 0, or 1001, and neither 0 nor 1001 is in [1, 1000], the lock thread identifier field is set to the invalid thread. It should be noted that when the lock thread identifier field is set to the invalid thread, it may be understood that the target lock is in a no-lock (non_lock) state.

In some other embodiments, that the lock thread identifier field is set to the invalid thread may further be implemented through setting a specific value or symbol in the lock thread identifier field. For example, when the lock thread identifier field is set to NA, the lock thread identifier field is set to the invalid thread.

Step 803: The first thread checks whether the lock thread identifier field is the first thread; and if the lock thread identifier field is the first thread, performs step 808; otherwise, performs step 804.

Step 804: The first thread checks whether a blocked thread quantity field is less than a first threshold; and if the blocked thread quantity field is less than the first threshold, performs step 805; otherwise, performs step 807.

For example, the first threshold may be 3. 4, or 5. Specifically, the first threshold may be set before delivery of an electronic device, or may be determined by an electronic device based on a running status of the electronic device. This is not limited. For example, a value of the first threshold may be larger when the electronic device runs at a fast speed; or a value of the first threshold may be smaller when the electronic device is stalled during running.

Step 805: The first thread performs spin wait.

In some embodiments, the first thread may perform spin wait in the following manners:
The first thread invokes a sched_yield system function to send a yield instruction to a processor. After receiving the yield instruction, the processor suspends the first thread within specific duration, so that the first thread gives up a control right of the processor within the specific duration, and performs spin wait.

It should be noted that, in this embodiment of this application, the first thread may alternatively perform spin wait in another manner. This is not limited.

Step 806: When a quantity of times that the first thread performs spin wait reaches a second threshold, if it is checked that the lock thread identifier field is the valid thread and is not the first thread, the first thread performs an operation of adding 1 to the blocked thread quantity field, and suspends to enter a blocked state.

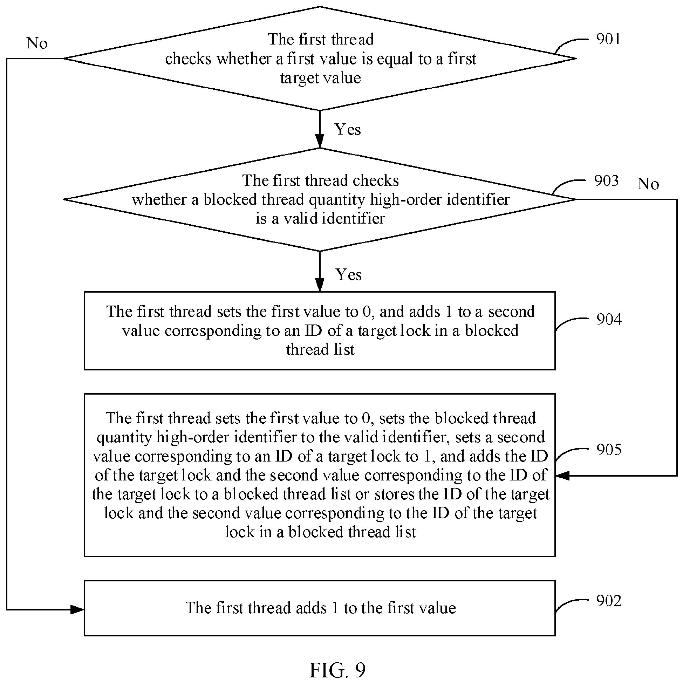

In some embodiments, the blocked thread quantity field includes a first value and a blocked thread quantity high-order identifier. For details, refer to the foregoing related descriptions. In this case, as shown in FIG. 9, the first thread may perform the operation of adding 1 to the blocked thread quantity field, which may specifically include the following steps:
Step 901: The first thread checks whether the first value is equal to a first target value, where the first target value is a maximum value corresponding to a low-order bit of a quantity of threads in a blocked state for the target lock; and if the first value is equal to the first target value, performs step 903; otherwise, performs step 902.

That is, the first thread compares the first value with the first target value or determines whether the first value is the same as the first target value.

Step 902: The first thread adds 1 to the first value.

For example, a value corresponding to the low-order bit of the quantity of threads in the blocked state for the target lock is set at bit 3 in the lockword. In this case, the first target value is 7. When the first value is 4, the first thread adds 1 to the first value, and sets the first value to 5.

Step 903: The first thread checks whether the blocked thread quantity high-order identifier is a valid identifier; and if the blocked thread quantity high-order identifier is the valid identifier, performs step 904; otherwise, performs step 905.

It may be understood that, the blocked thread quantity high-order identifier is not the valid identifier is equivalent to that the blocked thread quantity high-order identifier is an invalid identifier.

Step 904: The first thread sets the first value to 0, and adds 1 to a second value corresponding to an ID of the target lock in a blocked thread list.

Step 905: The first thread sets the first value to 0, sets the blocked thread quantity high-order identifier to the valid identifier, sets a second value corresponding to an ID of the target lock to 1, and adds the ID of the target lock and the second value corresponding to the ID of the target lock to a blocked thread list or stores the ID of the target lock and the second value corresponding to the ID of the target lock in a blocked thread list.

In some embodiments, the first thread may suspend to enter the blocked state in the following manner:
The first thread performs a system call to set a state of the first thread to a sleep state and add the first thread to a waiting queue corresponding to the address of the target lock. For example, the first thread performs the system call based on a fast userspace mutex (fast userspace mutex, futex) mechanism to set the state of the first thread to the sleep state and add the first thread to the waiting queue corresponding to the address of the target lock. For example, the first thread may suspend to enter the blocked state through the system call futex_wait.

In some other embodiments of this application, when the quantity of times for spin wait is less than the second threshold, the first thread sets the lock thread identifier field to the first thread. The first thread gains access to a shared resource protected by the target lock.

Step 807: The first thread performs an operation of adding 1 to the blocked thread quantity field, and suspends to enter a blocked state.

For a specific implementation in which the first thread performs the operation of adding 1 to the blocked thread quantity field, and suspends to enter the blocked state, refer to related descriptions in step 806. Details are not described herein again.

Step 808: The first thread performs an operation of adding 1 to the repeated lock times field.

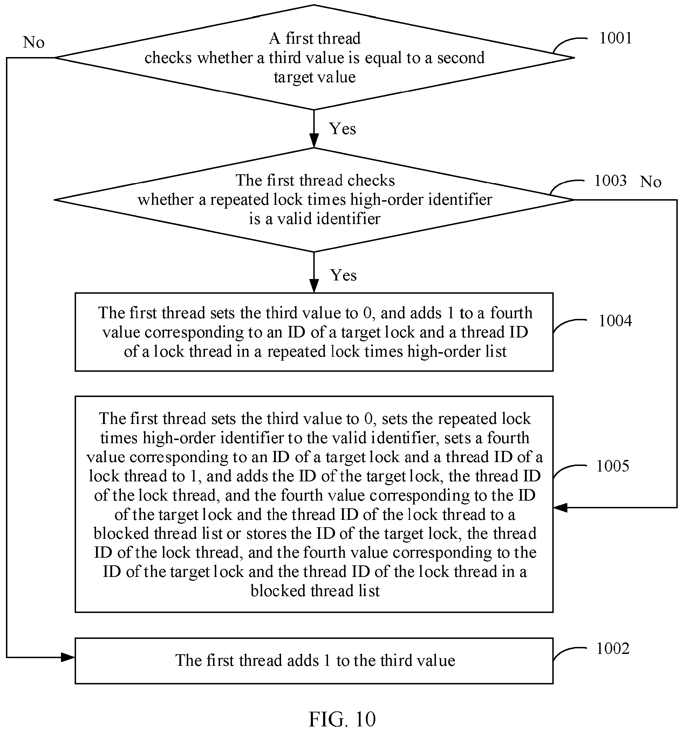

In some embodiments, the repeated lock times field includes a third value and a repeated lock times high-order identifier. For details, refer to the foregoing related descriptions. In this case, as shown in FIG. 10, the first thread may perform the operation of adding 1 to the repeated lock times field, which may specifically include the following steps:
Step 1001: The first thread checks whether the third value is equal to a second target value, where the second target value is a maximum value corresponding to a low-order bit of a quantity of times that a lock thread holds the target lock; and if the third value is equal to the second target value, performs step 1003; otherwise, performs step 1002.
Step 1002: The first thread adds 1 to the third value.

For example, a value corresponding to the low-order bit of the quantity of times that the lock thread holds the target lock is set at bit 5 in the lockword. In this case, the second target value is 31. When the third value is 20, the first thread adds 1 to the third value, and sets the third value to 21.

Step 1003: The first thread checks whether the repeated lock times high-order identifier is a valid identifier; and if the repeated lock times high-order identifier is the valid identifier, performs step 1004; otherwise, performs step 1005.

Step 1004: The first thread sets the third value to 0, and adds 1 to a fourth value corresponding to the ID of the target lock and a thread ID of a lock thread in a repeated lock times high-order list.

Step 1005: The first thread sets the third value to 0, sets the repeated lock times high-order identifier to the valid identifier, sets a fourth value corresponding to the ID of the target lock and a thread ID of a lock thread to 1, and adds the ID of the target lock, the thread ID of the lock thread, and the fourth value corresponding to the ID of the target lock and the thread ID of the lock thread to a blocked thread list or stores the ID of the target lock, the thread ID of the lock thread, and the fourth value corresponding to the ID of the target lock and the thread ID of the lock thread in the blocked thread list.

Step 809: The first thread sets the lock thread identifier field to the first thread, and initializes a repeated lock times field.

That the first thread initializes the repeated lock times field may be understood as that the first thread sets the repeated lock times field to an initial value. For example, when the initial value is 0, the first thread sets the repeated lock times field to 0. When the initial value is 1, the first thread sets the repeated lock times field to 1.

For example, when the lock thread directly sets the repeated lock times field to the quantity of times that the lock thread holds the target lock, the initial value may be 1. For example, when the lock thread sets the repeated lock times field to the quantity of times that the lock thread repeatedly holds the target lock, the initial value may be 0.

In this embodiment of this application, when the quantity of times that the first thread performs spin wait reaches the second threshold, the first thread only needs to perform the operation of adding 1 to the blocked thread quantity field, suspends to enter the blocked state, does not need to suspend the lock thread for the target lock and does not need to allocate a monitor object. This helps reduce duration for gaining access to the shared resource by the lock thread, helps reduce a stalling probability of the electronic device, and improve user experience.

In addition, in this embodiment of this application, when the first thread is the lock thread, if the target lock is repeatedly held, the first thread only needs to perform the operation of adding 1 to the repeated lock times field, and does not need to allocate the monitor object to modify the lock status. This helps to improve processing efficiency of the first thread and improve a running speed of the electronic device, and helps improve user experience.

Example 2: The first thread requests to release the target lock. In some embodiments, when the first thread runs to a function or a program instruction that requests to release the target lock, execution of a process in which the first thread requests to release the target lock is triggered. For example, the function or the program instruction that requests to release the target lock is MonitorExit.

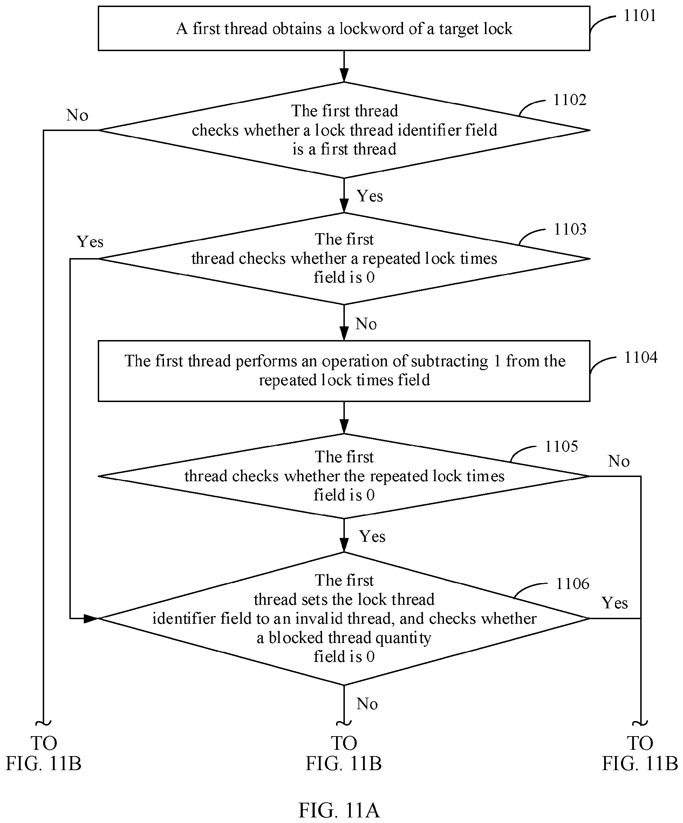

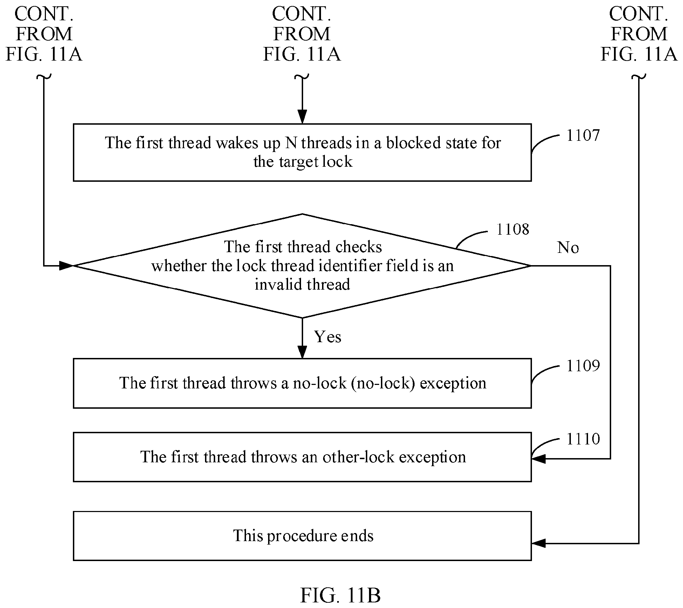

For example, that the first thread requests to release the target lock includes the following steps, which are specifically shown in FIG. 11A and FIG. 11B.

Step 1101: The first thread obtains a lockword of the target lock. For details, refer to the related description in step 801.

Step 1102: The first thread checks whether a lock thread identifier field is a first thread; and if the lock thread identifier field is the first thread, performs step 1103; otherwise, performs step 1108.

For example, the first thread determines whether the lock thread identifier field is a thread ID of the first thread.

Step 1103: The first thread checks whether a repeated lock times field is 0; and if the repeated lock times field is 0, performs step 1106; otherwise, performs step 1104.

It should be noted that if the repeated lock times is not 0, it may be understood that the repeated lock times indicates that a quantity of times that a lock thread holds the target lock is greater than 0. If the repeated lock times is 0, it may be understood that the repeated lock times indicates that a quantity of times that a lock thread holds the target lock is 0.

Step 1104: The first thread performs an operation of subtracting 1 from the repeated lock times field.

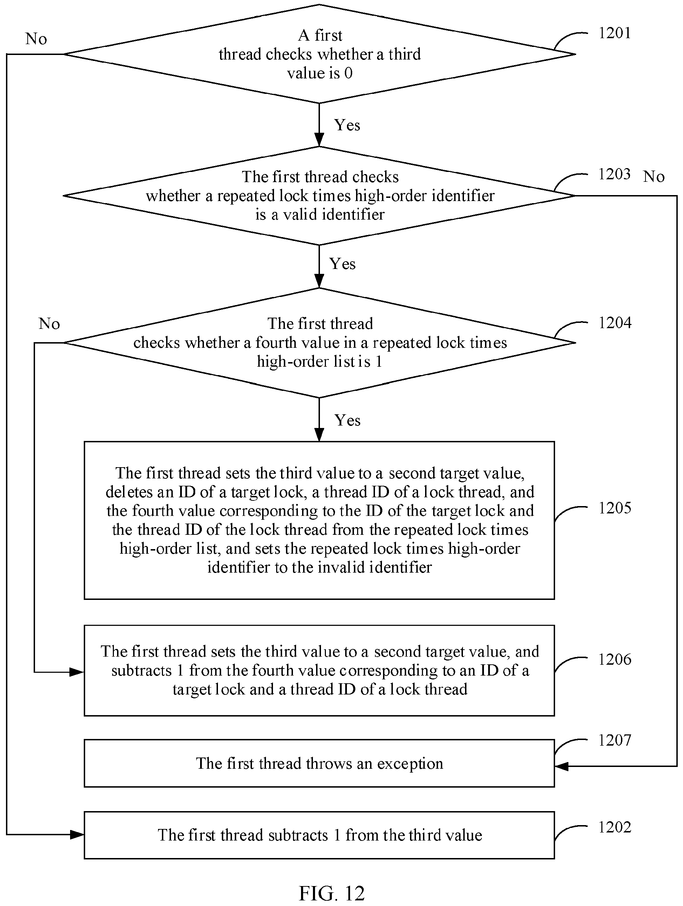

In some embodiments, the repeated lock times field includes a third value and a repeated lock times high-order identifier. For details, refer to the foregoing related descriptions. In this case, as shown in FIG. 12, the first thread performs the operation of subtracting 1 from the repeated lock times, which may specifically include the following steps:
Step 1201: The first thread checks whether the third value is 0, that is, the first thread determines whether a quantity of times that the lock thread (namely, the first thread) holds the target lock is 0; and if the third value is not 0, performs step 1202; and if the third value is 0, performs step 1203.
Step 1202: The first thread subtracts 1 from the third value.

For example, a value corresponding to a low-order bit of the quantity of times that the lock thread holds the target lock is set at bit 5 in the lockword. In this case, when the third value is 20, the first thread subtracts 1 from the third value, and sets the third value to 19.

Step 1203: The first thread checks whether the repeated lock times high-order identifier is a valid identifier; and if the repeated lock times high-order identifier is the valid identifier, performs step 1204; otherwise, performs step 1207.

Step 1204: The first thread checks whether a fourth value corresponding to an ID of the target lock and a thread ID of the lock thread in a repeated lock times high-order list is 1; and if the fourth value corresponding to the ID of the target lock and the thread ID of the lock thread in the repeated lock times high-order list is 1, performs step 1205; otherwise, performs step 1206.

It should be noted that the fourth value corresponding to the ID of the target lock and the thread ID of the lock thread in the repeated lock times high-order list is not 1 may be understood as: The fourth value corresponding to the ID of the target lock and the thread ID of the lock thread in the repeated lock times high-order list is greater than 1.

Step 1205: The first thread sets the third value to a second target value, deletes the ID of the target lock, the thread ID of the lock thread, and the fourth value corresponding to the ID of the target lock and the thread ID of the lock thread from the repeated lock times high-order list, and sets the repeated lock times high-order identifier to an invalid identifier.

Step 1206: The first thread sets the third value to a second target value, and subtracts 1 from the fourth value corresponding to an ID of the target lock and a thread ID of a lock thread.

Step 1207: The first thread throws an exception.

Step 1105: After the first thread performs the operation of subtracting 1 from the repeated lock times field, the first thread rechecks whether the repeated lock times field is 0; and if the repeated lock times field is 0, performs step 1106; otherwise, ends the process.

Step 1106: The first thread sets the lock thread identifier field to an invalid thread, and checks whether a blocked thread quantity field is 0; and if the blocked thread quantity field is not 0, performs step 1107; otherwise, ends the process.

Step 1107: The first thread wakes up N threads in a blocked state for the target lock. Further, after waking up the N threads in the blocked state for the target lock, the first thread may further perform an operation of subtracting N from the blocked thread quantity field. Alternatively, the first thread wakes up the N threads in the blocked state for the target lock, and does not perform an operation of subtracting N from the blocked thread quantity field. After one of the N threads sets the lock thread identifier field to the thread, the thread performs an operation of subtracting 1 from a blocked thread quantity field, and other N-1 threads of the N threads may suspend to enter the blocked state again. For example, when a third thread of the N threads sets the lock thread identifier field to the third thread, the third thread performs an operation of subtracting 1 from a blocked thread quantity field.

N is a positive integer greater than or equal to 1. For example, N may be 1 or 2, or may be 3, or may be the quantity of all the threads in the blocked state for the target lock. N may be preset in code by a developer according to a requirement.

In some embodiments, the first thread may wake up at least one of the threads in the blocked state for the target lock in the following manner:

The first thread performs a system call to set a status of the at least one thread in a waiting queue corresponding to an address of the target lock to a running mode and add the at least one thread to a running queue corresponding to the address of the target lock. The waiting queue corresponding to the address of the target lock includes the at least one of the threads in the blocked state for the target lock.

For example, the first thread may perform the system call based on a futex mechanism to wake up the at least one of the threads in the blocked state for the target lock. For example, the first thread performs the system call futex_wake to wake up the at least one of the threads in the blocked state for the target lock.

Step 1108: The first thread checks whether the lock thread identifier field is an invalid thread; and if the lock thread identifier field is the invalid thread, performs step 1109; otherwise, performs step 1110.

Step 1109: The first thread throws a no-lock exception.

Step 1110: The first thread throws an other-lock exception.

Example 3: The first thread requests to terminate holding the target lock. That the first thread requests to terminate holding the target lock may be understood as: The first thread actively requests to give up holding the target lock when the first thread holds the target lock and does not release the target lock. In some embodiments, when the first thread runs a function or a program instruction that requests to terminate holding the target lock, execution of a process in which the first thread requests to terminate the target lock is triggered. For example, the function or the program instruction that requests to terminate holding the target lock is MonitorWait.

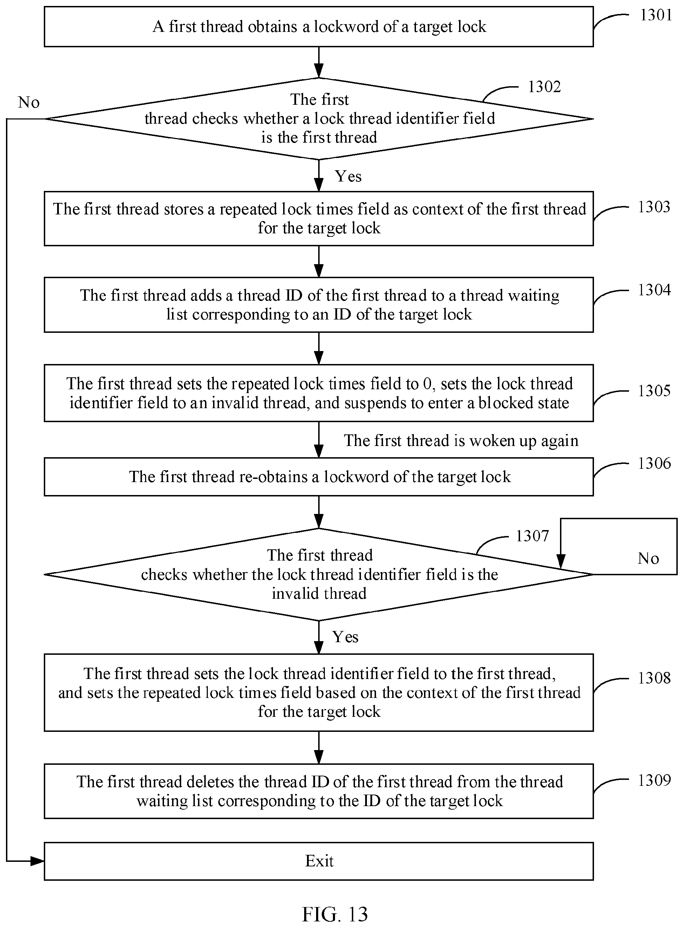

For example, that the first thread requests to terminate holding the target lock includes the following steps, which are specifically shown in FIG. 13.

Step 1301: The first thread obtains a lockword of the target lock. For details, refer to the related description in step 801. Details are not described herein again.

Step 1302: The first thread checks whether a lock thread identifier field is the first thread; and if the lock thread identifier field is the first thread, performs step 1303; otherwise, exits.

Step 1303: The first thread stores a repeated lock times field as context of the first thread for the target lock.

That the first thread stores the repeated lock times field as the context of the first thread for the target lock may be understood as: The first thread stores a quantity of times that the first thread holds the target lock as the context of the first thread for the target lock.

For example, when the repeated lock times field includes a third value and a repeated lock times high-bit identifier, and the repeated lock times high-bit identifier is a valid identifier, that the first thread stores the quantity of times for holding the target lock as the context of the first thread for the target lock may be that the first thread stores the third value, the repeated lock times high-bit identifier, and a fourth value corresponding to an ID of the target lock and a thread ID of the lock thread in a repeated lock times high-bit list as the context of the first thread for the target lock; or the first thread determines a fifth value based on the third value, the repeated lock times high-bit identifier, and a fourth value corresponding to an ID of the target lock and a thread ID of the lock thread in a repeated lock times high-bit list, where the fifth value is a quantity of times that the first thread holds the target lock, and stores the fifth value as the context of the first thread for the target lock.

For example, the third value is 7, the repeated lock coefficient high-bit identifier is the valid identifier, and the fourth value corresponding to the ID of the target lock and the thread ID of the lock thread in the repeated lock times high-bit list is 1. When a maximum value corresponding to a low-order bit of the quantity of times that a lock thread holds the target lock is 7, the fifth value is 15. The first thread may store 15 as the context of the first thread for the target lock, or may store 7, the repeated lock coefficient high-bit identifier, and 1 as the context of the first thread for the target lock.

For another example, when the repeated lock times field includes the third value and the repeated lock times high-bit identifier, and the repeated lock times high-bit identifier is an invalid identifier, the first thread stores the quantity of times for holding the target lock as the context of the first thread for the target lock may be that the first thread stores the third value as the context of the first thread for the target lock, or the first thread stores the third value and the repeated lock times high-bit identifier as the context of the first thread for the target lock.

For example, the first thread may store the context of the first thread for the target lock in specified storage space.

Step 1304: The first thread adds a thread ID of the first thread to a thread waiting list corresponding to the ID of the target lock.

For example, the first thread may add the thread ID of the first thread to the thread waiting list corresponding to the ID of the target lock in the following manner:

First, the first thread searches, by using the ID of the target lock, for the thread waiting list corresponding to the ID of the target lock. If the first thread does not find the thread waiting list corresponding to the ID of the target lock, the first thread creates the thread waiting list corresponding to the ID of the target lock, and adds the thread ID of the first thread to the thread waiting list corresponding to the ID of the target lock. If the first thread finds the thread waiting list corresponding to the ID of the target lock, the first thread adds the thread ID of the first thread to the thread waiting list corresponding to the ID of the target lock.

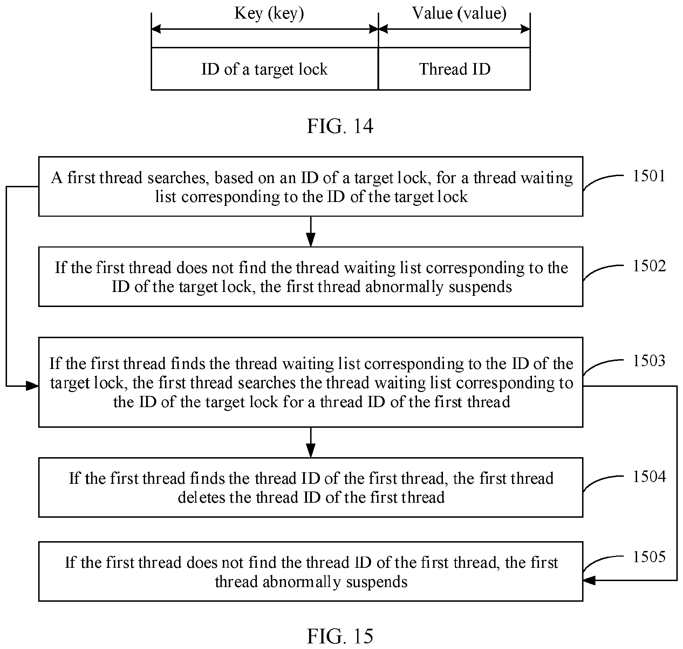

In some embodiments, the thread waiting list corresponding to the ID of the target lock may be a global variable, and is stored in an electronic device in a form of a single linked list. A thread ID of a first thread is used as an example. A format in which a thread waiting list corresponding to an ID of a target lock stores the thread ID of the first thread may be shown in FIG. 14. The ID of the target lock is key, and the thread ID of the first thread is value. In this way, the thread ID of the first thread can be indexed from the thread waiting list corresponding to the ID of the target lock by using the ID of the target lock.

Step 1305: The first thread sets the repeated lock times field to 0, sets the lock thread identifier field to an invalid thread, and suspends to enter a blocked state. In this way, the first thread actively gives up a control right on the target lock when the first thread holds the target lock but does not release the lock, so that another thread, especially a thread whose service priority is higher than a service priority of the first thread, can preferably hold the lock and gain access to a shared resource, thereby meeting user's requirement.

Specifically, that the first thread sets the repeated lock times field to 0 is that the first thread clears the quantity of holding times indicated by the repeated lock times field to 0. For example, when the repeated lock times field includes the third value and the repeated lock times high-bit identifier, and the repeated lock times high-bit identifier is the valid identifier, that the first thread sets the repeated lock times field to 0 is that the first thread sets the third value to 0, sets the repeated lock times high-bit identifier to the invalid identifier, and sets the fourth value corresponding to the ID of the target lock and the thread ID of the first thread in the repeated lock times high-order list to 0.

It should be noted that, for a specific implementation in which the first thread suspends to enter the blocked state, refer to related descriptions in step 805. Details are not described herein again.

Further, if the first thread is woken up again after step 1305, the first thread may re-request to obtain the target lock, which specifically includes the following steps:

Step 1306: The first thread re-obtains the lockword of the target lock.

Step 1307: The first thread checks whether the lock thread identifier field is the invalid thread; and if the lock thread identifier field is the invalid thread, performs step 1308; otherwise, continues to check whether the lock thread identifier field is the invalid thread.

Step 1308: The first thread sets the lock thread identifier field to the first thread, and sets the repeated lock times field based on the context of the first thread for the target lock.

For example, the quantity of times that the first thread holds the target lock included in the context of the first thread for the target lock is 15, and the first thread sets the repeated lock times field to 14 or 15. Specifically, when setting the repeated lock times field based on the quantity of times that the lock thread repeatedly holds the target lock, the first thread sets the repeated lock times field to 14. When setting the repeated lock times field based on the quantity of times that the lock thread holds the target lock, the first thread sets the repeated lock times field to 15.

Further, in some embodiments, the repeated lock times field includes the third value and the repeated lock times high-order identifier. When the third value with 3 bits is set in the repeated lock times field, if the quantity of times that the first thread holds the target lock included in the context of the first thread for the target lock is 15, the first thread sets the third value to 6 or 7, sets the repeated lock times high-order identifier to the valid identifier, sets the fourth value corresponding to the ID of the target lock and the thread ID of the first thread to 1, and adds the ID of the target lock, the thread ID of the first thread, and the fourth value corresponding to the ID of the target lock and the thread ID of the first thread to the repeated lock times high-order list or stores the ID of the target lock, the thread ID of the first thread, and the fourth value corresponding to the ID of the target lock and the thread ID of the first thread in the repeated lock times high-order list.

Step 1309: The first thread deletes the thread ID of the first thread from the thread waiting list corresponding to the ID of the target lock.

For example, as shown in FIG. 15, a first thread deletes a thread ID of the first thread from a thread waiting list corresponding to an ID of a target lock, which may specifically include the following steps:

Step 1501: The first thread searches, based on the ID of the target lock, for the thread waiting list corresponding to the ID of the target lock.

Step 1502: If the first thread does not find the thread waiting list corresponding to the ID of the target lock, the first thread abnormally suspends.

Step 1503: If the first thread finds the thread waiting list corresponding to the ID of the target lock, the first thread searches the thread waiting list corresponding to the ID of the target lock for the thread ID of the first thread.

Step 1504: If the first thread finds the thread ID of the first thread, the first thread deletes the thread ID of the first thread.

Step 1505: If the first thread does not find the thread ID of the first thread, the first thread abnormally suspends.

In addition, a thread that actively gives up holding the target lock may be woken up in the following manners:

Manner 1: A second thread searches, based on the ID of the target lock, for the thread waiting list corresponding to the ID of the target lock. After finding the thread waiting list corresponding to the ID of the target lock, the second thread checks the thread waiting list corresponding to the ID of the target lock. If the second thread checks that the thread waiting list corresponding to the ID of the target lock is not empty, that is, a thread ID is stored in the thread waiting list corresponding to the ID of the target lock, the second thread selects at least one thread ID from the thread waiting list corresponding to the ID of the target lock, and wakes up a thread identified by using the at least one thread ID.

The second thread may be a thread that belongs to a process same as and is in running mode as the thread identified by one or more thread IDs in the thread waiting list corresponding to the ID of the target lock. The second thread may check at intervals of specific duration whether the thread waiting list corresponding to the ID of the target lock is empty.

For example, the second thread selects a first thread ID from the thread waiting list corresponding to the ID of the target lock, and wakes up a thread identified by using the first thread ID. When the first thread ID indicates the first thread, the first thread is woken up.

Manner 2: When a system checks or detects that the thread ID of the first thread is in the thread waiting list corresponding to the ID of the target lock, the system suspends from the first thread to enter the blocked state and start a timer, and wakes up the first thread after the timer expires.

The foregoing description is provided merely by using an example of a wake-up manner for the thread that actively gives up holding the target lock, and does not constitute a limitation on the wake-up manner for the thread that actively gives up holding the target lock.

In addition, it may be understood that, in a process in which the first thread requests to terminate holding the target lock, if an interrupt (interrupt) status of the first thread changes, an exception is thrown. For example, in a process in which the first thread suspends to enter the blocked state in step 1305, if the interrupt (interrupt) status of the target lock, if an interrupt (interrupt) status of the first thread changes, an exception is thrown. For example, in a process in which the first thread suspends to enter the blocked state in step 1305, if the interrupt (interrupt) status of the first thread changes, the exception is thrown, and subsequent steps are not continued. For another example, in a process in which the first thread is woken up, if the interrupt (interrupt) status of the first thread changes, the exception is thrown, and subsequent steps are not continued.

The following describes the multi-thread synchronization method in the embodiments of this application with reference to a specific scenario.

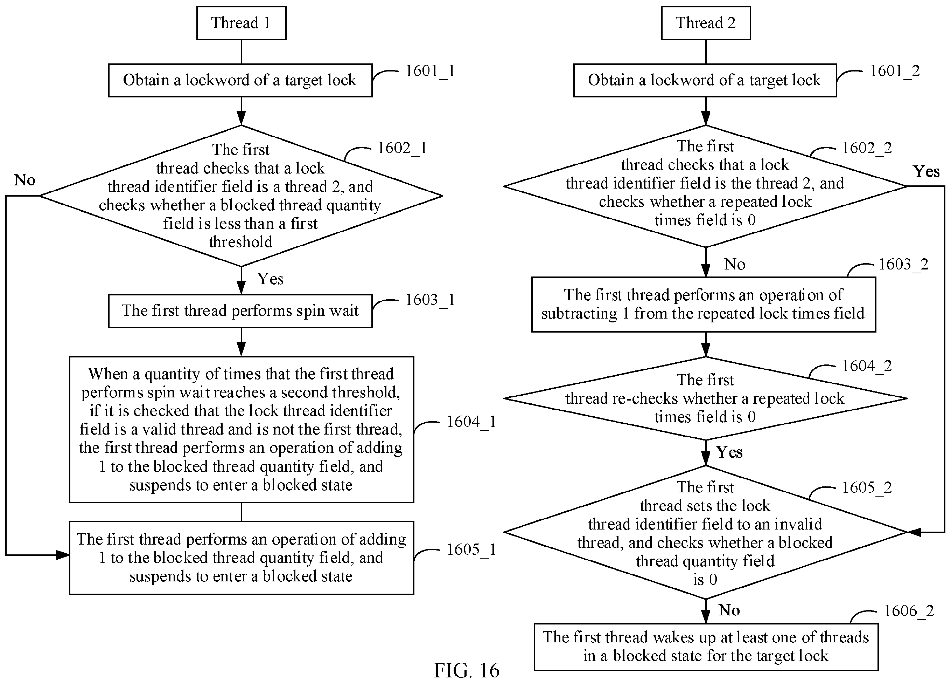

For example, a target lock is a lock 1. For example, a lock thread is a thread 2 for the lock 1. When the thread 2 requests to release the lock 1, a thread 1 may request to obtain the lock 1, where the thread 1 is a non-lock thread of the lock 1. In this case, as shown in FIG. 16, the thread 1 requests to obtain the lock 1 and the thread 2 requests to release the lock 1, which specifically includes the following steps:
Step 1601_1: The thread 1 obtains a lockword of the lock 1. Step 1601 _ 2: The thread 2 obtains a lockword of the lock 1.
Step 1602_1: The thread 1 checks that a lock thread identifier field is the thread 2; checks whether a blocked thread quantity field is less than a first threshold; and if the blocked thread quantity field is less than the first threshold, performs step 1603_1; otherwise, performs step 1605_1.
Step 1603_1: The thread 1 performs spin wait.
Step 1604_1: When a quantity of times that the thread 1 performs spin wait reaches a second threshold, if it is checked that the lock thread identifier field is a valid thread and is not the first thread, the thread 1 performs an operation of adding 1 to the blocked thread quantity field, and suspends to enter a blocked state.
Step 1605_1: The thread 1 performs an operation of adding 1 to the blocked thread quantity field, and suspends to enter a blocked state.
Step 1602_2: The thread 2 checks that a lock thread identifier field is the thread 2; checks whether a repeated lock times field is 0; and if the repeated lock times field is not 0, performs step 1603_2; otherwise, performs step 1605_2.
Step 1603_2: The thread 2 performs an operation of subtracting 1 from the repeated lock times field.
Step 1604_2: The thread 2 re-checks whether a repeated lock times field is 0; and if the repeated lock times field is 0, performs step 1605_2; otherwise, the thread 2 continues to hold the lock 1.
Step 1605_2: The thread 2 sets the lock thread identifier field to an invalid thread; checks whether a blocked thread quantity field is 0; and if the blocked thread quantity field is not 0, performs step 1606_2; otherwise, ends the process. field is checked as the thread 2.

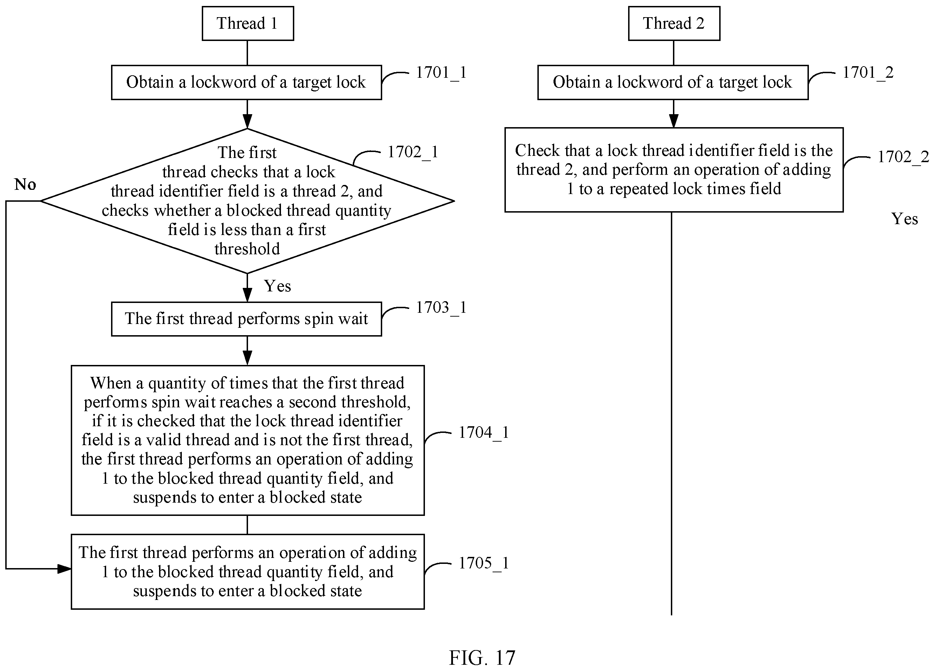

For example, a target lock is a lock 1. For example, a lock thread is a thread 2 for the lock 1. When the thread 2 re-requests to obtain the lock 1, a thread 1 may request to obtain the lock 1, where the thread 1 is a non-lock thread of the lock 1. In this case, as shown in FIG. 17, the thread 1 requests to obtain the lock 1 and thread 2 re-requests to obtain the lock 1, which specifically includes the following steps:
Step 1701_1: The thread 1 obtains a lockword of the lock 1. Step 1701_2: The thread 2 a lockword of the lock 1.
Step 1702_1: The thread 1 checks that a lock thread identifier field is the thread 2; checks whether a blocked thread quantity field is less than a first threshold; and if the blocked thread quantity field is less than the first threshold, performs step 1703_1; otherwise, performs step 1705_1.
Step 1703_1: The thread 1 performs spin wait.
Step 1704_1: When a quantity of times that the thread 1 performs spin wait reaches a second threshold, if it is checked that the lock thread identifier field is a valid thread and is not the first thread, the thread 1 performs an operation of adding 1 to the blocked thread quantity field, and suspends to enter a blocked state.
Step 1705_1: The thread 1 performs an operation of adding 1 to the blocked thread quantity field, and suspends to enter a blocked state.
Step 1702_2: The thread 2 checks that a lock thread identifier field is the thread 2, and performs an operation of adding 1 to a repeated lock times field.

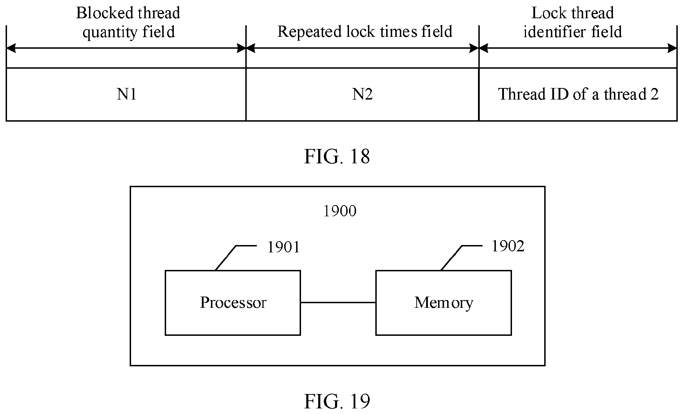

For example, a lockword of a lock 1 is shown in FIG. 18. A blocked thread quantity field is N1, a repeated lock times field is N2, a first threshold is L1, and a second threshold is L2. When a thread 2 requests to release the lock 1, a thread 1 may request to obtain the lock 1. For changes of different fields in the lockword at different time, refer to Table 1, Table 2, and Table 3. As described in Table 1, a lock thread identifier field is a field 1 for short, a repeated lock times field is a field 2 for short, and a blocked thread quantity field is a field 3 for short.

**Table 1**

| Time | Thread 1 | Thread 2 | Thread 3 | Lockword |
|---|---|---|---|---|
| 1 | Obtains a lockword | Obtains the lockword | Blocked state | Field 1: Thread 2 |
| | | | | Field 2: N2 |
| | | | | Field 3: N1 |
| 2 | Checks the field 1 is the thread 2 | Checks the field 1 is the thread 2 | Blocked state | Field 1: Thread 2 |
| | | | | Field 2: N2 |
| | | | | Field 3: N1 |
| 3 | If N1 is greater than or equal to L1, adds 1 to the field 3 and suspends | If N2 is greater than 0, subtracts 1 from the field 2 | Blocked state | Field 1: Thread 2 |
| | | | | Field 2: N2-1 |
| | | | | Field 3: N1+1 |
| 4 | Blocked state | If N2-1 is 0, sets the field 1 to an invalid thread | Blocked state | Field 1: 0 |
| | | | | Field 2: 0 |
| | | | | Field 3: N1+1 |
| 5 | Obtains a lockword | Wakes up the thread 1 and the thread 3, and subtracts 2 from the field 3 | Obtains a lockword | Field 1: 0 |
| | | | | Field 2: 0 |
| | | | | Field 3: N1-1 |
| 6 | Sets content that the thread 1 fails in the field 1, adds 1 to the field 3, and re-suspends to enter the blocked state | Not holding a lock and being not in the blocked state | Sets the field 1 to the thread 3, and initializes the field 2 | Field 1: Thread 3 |
| | | | | Field 2: Initial value |
| | | | | Field 3: N1 |

**Table 2**

| Time | Thread 1 | Thread 2 | Thread 3 | Lockword |
|---|---|---|---|---|
| 1 | Obtains a lockword | Obtains the lockword | Blocked state | Field 1: Thread 2 |
| | | | | Field 2: N2 |
| | | | | Field 3: N1 |
| 2 | The field 1 is the thread 2 | Checks the field 1 is the thread 2 | Blocked state | Field 1: Thread 2 |
| | | | | Field 2: N2 |
| | | | | Field 3: N1 |
| 3 | If N1 is less than L1, performs spin wait | If N2 equals to 0, sets the field 1 to 0 (an invalid thread) | Blocked state | Field 1: 0 |
| | | | | Field 2: 0 |
| | | | | Field 3: N1 |
| 4 | Spin wait | If N2-1 is 0, sets the field 1 to the invalid thread and wakes up the thread 3 | Blocked state | Field 1: 0 |
| | | | | Field 2: 0 |
| | | | | Field 3: N1 |
| 5 | If a quantity of times for spin wait is less than L2, sets the field 1 to the thread 1, and initializes the field 2 | Not holding a lock and being not in the blocked state | Obtains a | Field 1: Thread 1 |
| | | | lockword | Field 2: Initial value |
| | | | | Field 3: N1-1 |
| 6 | If the lock is repeatedly held, adds 1 to the field 2 | Not holding a lock and being not in the blocked state | Performs an operation of adding 1 to the field 3, re-suspends to enter the blocked state | Field 1: Thread 1 |
| | | | | Field 2: Initial value+1 |
| | | | | Field 3: N1 |

**Table 3**

| Time | Thread 1 | Thread 2 | Thread 3 | Lockword |
|---|---|---|---|---|
| 1 | Obtains a lockword | Obtains the lockword | Blocked state | Field 1: Thread 2 |
| | | | | Field 2: N2 |
| | | | | Field 3: N1 |
| 2 | The field 1 is the thread 2 | Checks the field 1 is the thread 2 | Blocked state | Field 1: Thread 2 |
| | | | | Field 2: N2 |
| | | | | Field 3: N1 |
| 3 | If N1 is less than L1, performs spin wait | Performs an operation of adding 1 to the field 2 | Blocked state | Field 1: Thread 2 |
| | | | | Field 2: N2+1 |
| | | | | Field 3: N1 |
| 4 | If a quantity of times for spin wait reaches L2, performs an operation of adding 1 to the field 3 | Holds a lock | Blocked state | Field 1: 0 |
| | | | | Field 2: 0 |
| | | | | Field 3: N1+1 |

It should be noted that the foregoing describes the multi-thread synchronization method by using the thread as an example. When a minimum unit of program execution is a granularity smaller or greater than the thread, the thread in the foregoing may alternatively be replaced with the minimum unit of program execution. This is not limited.

The foregoing embodiments may be used separately, or may be used in combination to achieve different technical effects.

In the foregoing embodiments provided in this application, the method provided in the embodiments of this application is described from a perspective of a mobile phone serving as an execution body. To implement the functions in the method provided in the embodiments of this application, the mobile phone may include a hardware structure and/or a software module, and the foregoing functions are implemented in a form of the software module or a combination of the hardware structure and the software module. Whether a function in the foregoing functions is performed by using the hardware structure, the software module, or the combination of the hardware structure and the software module depends on particular applications and design constraints of the technical solutions.

As shown in FIG. 19, an embodiment of this application discloses an electronic device 1900. The electronic device 1900 may include one or more processors 1901 and a memory 1902. The foregoing components may be connected through one or more communications buses. Program instructions are stored in the memory 1902 and are configured to be executed by the one or more processors 1901, to implement the multi-thread synchronization methods shown in FIG. 8 to FIG. 13 and FIG. 15 to FIG. 17 in the embodiments of this application.

The processor in the foregoing embodiments may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and the logical block diagrams that are disclosed in the embodiments of this application. The general-purpose processor may be a microprocessor, or the processor may be any conventional processor or the like. The steps in the methods disclosed with reference to the embodiments of this application may be directly performed and completed by a hardware decoding processor, or may be performed and completed by using a combination of hardware in a decoding processor and a software module. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

Specifically, for a specific implementation of the electronic device 1900, refer to related descriptions in the method part. Details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each specific application.

A person skilled in the art may clearly understand that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and parts displayed as units may or may not be physical units, that is, they may be located in one position, or may be distributed on a plurality of network units. Some or all of the units may be selected according to actual requirements to achieve the objectives of the solutions in the embodiment.

In addition, each functional unit in the embodiments of this application may be integrated into one processing unit, or each of the units may exist alone physically**,** or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes any medium that can store program code, such as a USB flash drive, a removable hard disk, a ROM, a RAM, a magnetic disk, or an optical disc.

## Claims

1. A multi-thread synchronization method, wherein the method comprises:
requesting, by a first thread, to obtain a target lock, comprising:
step 1 (801, 1601_1, 1701_1, 1701_2): obtaining, by the first thread, a lockword of the target lock, wherein the lockword comprises a lock thread identifier field and a blocked thread quantity field, the lock thread identifier field is used to indicate a thread holding the target lock, and the blocked thread quantity field is used to indicate a quantity of threads in a blocked state for the target lock;
step 2 (802, 803, 1602_1, 1702_1): checking, by the first thread, the lock thread identifier field;
step 3 (804, 1602_1, 1702_1): checking, by the first thread, the blocked thread quantity field if the first thread checks that the lock thread identifier field is a valid thread and is not the first thread;
step 4 (805, 1603_1, 1703_1): performing, by the first thread, spin wait if the first thread checks that the blocked thread quantity field is less than a first threshold; and
step 5 (806, 1604_1, 1704_1): when a quantity of times that the first thread performs spin wait reaches a second threshold, if it is checked that the lock thread identifier field is a valid thread and is not the first thread, performing, by the first thread, an operation of adding 1 to the blocked thread quantity field, and suspending to enter a blocked state.

2. The method according to claim 1, after step 3, further comprising:
step 6 (807, 1605_1, 1705_1): if the first thread checks that the blocked thread quantity field is greater than or equal to the first threshold, performing, by the first thread, an operation of adding 1 to the blocked thread quantity field, and suspending to enter a blocked state.

3. The method according to claim 1 or 2, wherein the lockword further comprises a repeated lock times field, and the repeated lock times field is used to indicate a quantity of times that a lock thread holds the target lock.

4. The method according to claim 3, after step 2, further comprising:
step 7 (808, 1702_2): if the first thread checks that the lock thread identifier field is the first thread, performing, by the first thread, an operation of adding 1 to the repeated lock times field.

5. The method according to claim 3, after step 2, further comprising:
step 8 (809): if the first thread checks that the lock thread identifier field is an invalid thread, setting, by the first thread, the lock thread identifier field to the first thread, and setting the repeated lock times field to an initial value.

6. The method according to claim 3, wherein the method further comprises:
requesting, by the first thread, to release the target lock, comprising:
step 9 (1101): obtaining, by the first thread, the lockword of the target lock;
step 10 (1102): checking, by the first thread, the lock thread identifier field;
step 11 (1103): checking, by the first thread, the repeated lock times field if the first thread checks that the lock thread identifier field is the first thread; and
step 12 (1104): if the first thread checks that the repeated lock times field is not 0, performing, by the first thread, an operation of subtracting 1 from the repeated lock times field.

7. The method according to claim 6, after step 12, further comprising:
step 13 (1106): setting, by the first thread, the lock thread identifier field to an invalid thread if the first thread checks that the repeated lock times field is 0;
step 14 (1106): checking, by the first thread, the blocked thread quantity field; and
step 15 (1107): waking up, by the first thread, at least one of the threads in the blocked state for the target lock if the first thread checks that the blocked thread quantity field is not 0.

8. The method according to claim 3, wherein the method further comprises:
requesting, by the first thread, to terminate holding the target lock, comprising:
step 16 (1301): obtaining, by the first thread, the lockword of the target lock;
step 17 (1302): checking, by the first thread, the lock thread identifier field;
step 18 (1303): storing, by the first thread, the repeated lock times field as context of the first thread for the target lock if the first thread checks that the lock thread identifier field is the first thread;
step 19 (1304): adding, by the first thread, a thread identifier ID of the first thread to a thread waiting list corresponding to an ID of the target lock; and
step 20 (1305): setting, by the first thread, the repeated lock times field to 0, setting the lock thread identifier field to an invalid thread, and suspending to enter a blocked state.

9. The method according to claim 8, after step 20, further comprising:
step 21 (1306): obtaining, by the first thread, a lockword of the target lock after being woken up;
step 22 (1307): checking, by the first thread, the lock thread identifier field;
step 23 (1308): if the first thread checks that the lock thread identifier field is the invalid thread, setting, by the first thread, the lock thread identifier field to the first thread, and setting the repeated lock times field based on the context of the first thread for the target lock; and
step 24 (1309): deleting, by the first thread, the thread ID of the first thread from the thread waiting list corresponding to the ID of the target lock.

10. An electronic device (1900), wherein the electronic device (1900) comprises a processor (1901) and a memory (1902), the memory (1902) stores program instructions, and the processor (1901) invokes the program instructions for a first thread to request to obtain a target lock; and
that the first thread requests to obtain the target lock comprises:
step 1 (801, 1601_1, 1701_1, 1701_2): the first thread obtains a lockword of the target lock, wherein the lockword comprises a lock thread identifier field and a blocked thread quantity field, the lock thread identifier field is used to indicate a thread holding the target lock, and the blocked thread quantity field is used to indicate a quantity of threads in a blocked state for the target lock;
step 2 (802, 803, 1602_1, 1702_1): the first thread checks the lock thread identifier field;
step 3 (804, 1602_1, 1702_1): the first thread checks the blocked thread quantity field if the first thread checks that the lock thread identifier field is a valid thread and is not the first thread;
step 4 (805, 1603_1, 1703_1): the first thread performs spin wait if the first thread checks that the blocked thread quantity field is less than a first threshold; and
step 5 (806, 1604_1, 1704_1): when a quantity of times that the first thread performs spin wait reaches a second threshold, if it is checked that the lock thread identifier field is a valid thread and is not the first thread, the first thread performs an operation of adding 1 to the blocked thread quantity field, and suspends to enter a blocked state.

11. The electronic device according to claim 10, wherein after step 3, that the first thread requests to obtain the target lock further comprises:
step 6 (807, 1605_1, 1705_1): if the first thread checks that the blocked thread quantity field is greater than or equal to the first threshold, the first thread performs an operation of adding 1 to the blocked thread quantity field, and suspends to enter a blocked state.

12. The electronic device according to claim 10 or 11, wherein the lockword further comprises a repeated lock times field, and the repeated lock times field is used to indicate a quantity of times that a lock thread holds the target lock.

13. The electronic device according to claim 12, wherein after step 2, that the first thread requests to obtain the target lock further comprises:
step 7 (808, 1702_2): if the first thread checks that the lock thread identifier field is the first thread, the first thread performs an operation of adding 1 to the repeated lock times field.

14. The electronic device according to claim 13, wherein after step 2, that the first thread requests to obtain the target lock further comprises:
step 8 (809): if the first thread checks that the lock thread identifier field is an invalid thread, the first thread sets the lock thread identifier field to the first thread, and sets the repeated lock times field to an initial value.

15. A computer-readable storage medium, wherein the computer-readable storage medium comprises program instructions, and when the program instructions are run on an electronic device (1900), the electronic device (1900) is enabled to perform the method according to any one of claims 1 to 9.

## Patentansprüche

1. Verfahren zur Multi-Thread-Synchronisierung, wobei das Verfahren Folgendes umfasst:
Anfragen, durch einen ersten Thread, eine Zielsperre zu erlangen, umfassend:
Schritt 1 (801, 1601_1, 1701_1, 1701_2): Erlangen eines Sperrworts der Zielsperre durch den ersten Thread, wobei das Sperrwort ein Feld für die Sperr-Thread-Kennung und ein Feld für die Anzahl blockierter Threads umfasst, wobei das Feld für die Sperr-Thread-Kennung dazu verwendet wird, einen Thread anzugeben, der die Zielsperre hält, und das Feld für die Anzahl blockierter Threads dazu verwendet wird, eine Anzahl von Threads anzugeben, die sich für die Zielsperre in einem blockierten Zustand befinden;
Schritt 2 (802, 803, 1602_1, 1702_1): Prüfen des Felds für die Sperr-Thread-Kennung durch den ersten Thread;
Schritt 3 (804, 1602_1, 1702_1): Prüfen des Felds für die Anzahl blockierter Threads durch den ersten Thread, falls der erste Thread prüft, dass das Feld für die Sperr-Thread-Kennung ein gültiger Thread ist und nicht der erste Thread ist;
Schritt 4 (805, 1603_1, 1703_1): Durchführen eines Spin-Wait durch den ersten Thread, falls der erste Thread prüft, dass das Feld für die Anzahl blockierter Threads geringer als ein erster Schwellenwert ist; und
Schritt 5 (806, 1604_1, 1704_1) : wenn eine Anzahl von Malen, die der erste Thread ein Spin-Wait durchführt, einen zweiten Schwellenwert erreicht, falls geprüft wird, dass das Feld für die Sperr-Thread-Kennung ein gültiger Thread ist und nicht der erste Thread ist, Durchführen durch den ersten Thread einer Operation eines Hinzufügens von 1 zu dem Feld für die Anzahl blockierter Threads und Aussetzen zum Wechseln in einen blockierten Zustand.

2. Verfahren nach Anspruch 1, nach Schritt 3 ferner umfassend: Schritt 6 (807, 1605_1, 1705_1): falls der erste Thread prüft, dass das Feld für die Anzahl blockierter Threads größer oder gleich dem ersten Schwellenwert ist, Durchführen durch den ersten Thread einer Operation eines Hinzufügens von 1 zu dem Feld für die Anzahl blockierter Threads und Aussetzen zum Wechseln in einen blockierten Zustand.

3. Verfahren nach Anspruch 1 oder 2, wobei das Sperrwort ferner ein Feld für die Male wiederholter Sperren umfasst und das Feld für die Male wiederholter Sperren dazu verwendet wird, eine Anzahl von Malen anzugeben, die ein Sperr-Thread die Zielsperre hält.

4. Verfahren nach Anspruch 3, nach Schritt 2 ferner umfassend: Schritt 7 (808, 1702_2): falls der erste Thread prüft, dass das Feld für die Sperr-Thread-Kennung der erste Thread ist, Durchführen durch den ersten Thread einer Operation zum Hinzufügen von 1 zu dem Feld für die Male wiederholter Sperren.

5. Verfahren nach Anspruch 3, nach Schritt 2 ferner umfassend: Schritt 8 (809): falls der erste Thread prüft, dass das Feld für die Sperr-Thread-Kennung ein ungültiger Thread ist, Einstellen durch den ersten Thread des Felds für die Sperr-Thread-Kennung auf den ersten Thread und Einstellen des Felds für die Male wiederholter Sperren auf einen Anfangswert.

6. Verfahren nach Anspruch 3, wobei das Verfahren ferner Folgendes umfasst:
Anfragen durch den ersten Thread, die Zielsperre freizugeben, umfassend:
Schritt 9 (1101): Erlangen des Sperrworts der Zielsperre durch den ersten Thread;
Schritt 10 (1102): Prüfen des Felds für die Sperr-Thread-Kennung durch den ersten Thread;
Schritt 11 (1103): Prüfen des Felds für die Male wiederholter Sperren durch den ersten Thread, falls der erste Thread prüft, dass das Feld für die Sperr-Thread-Kennung der erste Thread ist; und
Schritt 12 (1104): falls der erste Thread prüft, dass das Feld für die Male wiederholter Sperren nicht 0 ist, Durchführen durch den ersten Thread einer Operation eines Abziehens von 1 von dem Feld für die Male wiederholter Sperren.

7. Verfahren nach Anspruch 6, nach Schritt 12 ferner umfassend:
Schritt 13 (1106): Einstellen durch den ersten Thread des Felds für die Sperr-Thread-Kennung auf einen ungültigen Thread, falls der erste Thread prüft, dass das Feld für die Male wiederholter Sperren 0 ist;
Schritt 14 (1106): Prüfen, durch den ersten Thread, des Felds für die Anzahl blockierter Threads; und
Schritt 15 (1107): Aufwecken mindestens eines der Threads in dem blockierten Zustand für die Zielsperre durch den ersten Thread, falls der erste Thread prüft, dass das Feld für die Anzahl blockierter Threads nicht 0 ist.

8. Verfahren nach Anspruch 3, wobei das Verfahren ferner Folgendes umfasst:
Anfragen, durch den ersten Thread, das Halten der Zielsperre zu beenden, umfassend:
Schritt 16 (1301): Erlangen des Sperrworts der Zielsperre durch den ersten Thread;
Schritt 17 (1302): Prüfen des Felds für die Sperr-Thread-Kennung durch den ersten Thread;
Schritt 18 (1303): Speichern des Felds für die Male wiederholter Sperren durch den ersten Thread als Kontext des ersten Threads für die Zielsperre, falls der erste Thread prüft, dass das Feld für die Sperr-Thread-Kennung der erste Thread ist;
Schritt 19 (1304): Hinzufügen einer Thread-Kennungs-ID des ersten Threads zu einer Thread-Warteliste, die einer ID der Zielsperre entspricht, durch den ersten Thread; und
Schritt 20 (1305): Einstellen durch den ersten Thread des Felds für die Male wiederholter Sperren auf 0, Einstellen des Felds für die Sperr-Thread-Kennung auf einen ungültigen Thread und Aussetzen, um in einen blockierten Zustand zu wechseln.

9. Verfahren nach Anspruch 8, nach Schritt 20 ferner umfassend:
Schritt 21 (1306): Erlangen eines Sperrworts für die Zielsperre durch den ersten Thread, nachdem er aufgeweckt wurde;
Schritt 22 (1307): Prüfen des Felds für die Sperr-Thread-Kennung durch den ersten Thread;
Schritt 23 (1308): falls der erste Thread prüft, dass das Feld für die Sperr-Thread-Kennung der ungültige Thread ist, Einstellen durch den ersten Thread des Felds für die Sperr-Thread-Kennung auf den ersten Thread und Einstellen des Felds für die Male wiederholter Sperren basierend auf dem Kontext des ersten Threads für die Zielsperre; und
Schritt 24 (1309): Löschen der Thread-ID des ersten Threads aus der Thread-Warteliste, die der ID der Zielsperre entspricht, durch den ersten Thread.

10. Elektronische Vorrichtung (1900), wobei die elektronische Vorrichtung (1900) einen Prozessor (1901) und einen Speicher (1902) umfasst, der Speicher (1902) Programmanweisungen speichert und der Prozessor (1901) die Programmanweisungen aufruft, damit ein erster Thread anfragt, eine Zielsperre zu erlangen; und
das Anfragen durch den ersten Thread, die Zielsperre zu erlangen, Folgendes umfasst:
Schritt 1 (801, 1601_1, 1701_1, 1701_2): der erste Thread erlangt ein Sperrwort der Zielsperre, wobei das Sperrwort ein Feld für die Sperr-Thread-Kennung und ein Feld für die Anzahl blockierter Threads umfasst, wobei das Feld für die Sperr-Thread-Kennung dazu verwendet wird, einen Thread anzugeben, der die Zielsperre hält, und das Feld für die Anzahl blockierter Threads dazu verwendet wird, eine Anzahl von Threads anzugeben, die sich für die Zielsperre in einem blockierten Zustand befinden;
Schritt 2 (802, 803, 1602_1, 1702_1): der erste Thread prüft das Feld für die Sperr-Thread-Kennung;
Schritt 3 (804, 1602_1, 1702_1): der erste Thread prüft das Feld für die Anzahl blockierter Threads, falls der erste Thread prüft, dass das Feld für die Sperr-Thread-Kennung ein gültiger Thread ist und nicht der erste Thread ist;
Schritt 4 (805, 1603_1, 1703_1) : der erste Thread führt einen Spin-Wait durch, falls der erste Thread prüft, dass das Feld für die Anzahl blockierter Threads geringer als ein erster Schwellenwert ist; und
Schritt 5 (806, 1604_1, 1704_1): wenn eine Anzahl von Malen, die der erste Thread ein Spin-Wait durchführt, einen zweiten Schwellenwert erreicht, falls geprüft wird, dass das Feld für die Sperr-Thread-Kennung ein gültiger Thread ist und nicht der erste Thread ist, führt der erste Thread eine Operation eines Hinzufügens von 1 zu dem Feld für die Anzahl blockierter Threads durch und setzt aus zum Wechseln in einen blockierten Zustand.

11. Elektronische Vorrichtung nach Anspruch 10, wobei nach Schritt 3 das Anfordern durch den ersten Thread, die Zielsperre zu erlangen, ferner Folgendes umfasst:
Schritt 6 (807, 1605_1, 1705_1): falls der erste Thread prüft, dass das Feld für die Anzahl blockierter Threads größer oder gleich dem ersten Schwellenwert ist, führt der erste Thread eine Operation eines Hinzufügens von 1 zu dem Feld für die Anzahl blockierter Threads durch und setzt aus zum Wechseln in einen blockierten Zustand.

12. Elektronische Vorrichtung nach Anspruch 10 oder 11, wobei das Sperrwort ferner ein Feld für die Male wiederholter Sperren umfasst und das Feld für die Male wiederholter Sperren dazu verwendet wird, eine Anzahl von Malen anzugeben, die ein Sperr-Thread die Zielsperre hält.

13. Elektronische Vorrichtung nach Anspruch 12, wobei nach Schritt 2 das Anfordern durch den ersten Thread, die Zielsperre zu erlangen, ferner Folgendes umfasst:
Schritt 7 (808, 1702_2): falls der erste Thread prüft, dass das Feld für die Sperr-Thread-Kennung der erste Thread ist, führt der erste Thread eine Operation zum Hinzufügen von 1 zu dem Feld für die Male wiederholter Sperren durch.

14. Elektronische Vorrichtung nach Anspruch 13, wobei nach Schritt 2 das Anfordern durch den ersten Thread, die Zielsperre zu erlangen, ferner Folgendes umfasst:
Schritt 8 (809): falls der erste Thread prüft, dass das Feld für die Sperr-Thread-Kennung ein ungültiger Thread ist, stellt der erste Thread das Feld für die Sperr-Thread-Kennung auf den ersten Thread ein und stellt das Feld für die Male wiederholter Sperren auf einen Anfangswert ein.

15. Computerlesbares Speichermedium, wobei das computerlesbare Speichermedium Programmanweisungen umfasst und, wenn die Programmanweisungen auf einer elektronischen Vorrichtung (1900) ausgeführt werden, die elektronische Vorrichtung (1900) in die Lage versetzt wird, das Verfahren nach einem der Ansprüche 1 bis 9 durchzuführen.

## Revendications

1. Procédé de synchronisation à fils multiples, dans lequel le procédé comprend :
la demande, par un premier fil, d'obtention d'un verrou cible, comprenant :
étape 1 (801, 1601_1, 1701_1, 1701_2) : l'obtention, par le premier fil, d'un mot de verrouillage du verrou cible, dans lequel le mot de verrouillage comprend un champ d'identifiant de fil de verrouillage et un champ de quantité de fils bloqués, le champ d'identifiant de fil de verrouillage est utilisé pour indiquer un fil détenant le verrou cible, et le champ de quantité de fils bloqués est utilisé pour indiquer une quantité de fils dans un état bloqué pour le verrou cible ;
étape 2 (802, 803, 1602_1, 1702_1) : la vérification, par le premier fil, du champ d'identifiant de fil de verrouillage ;
étape 3 (804, 1602_1, 1702_1) : la vérification, par le premier fil, du champ de quantité de fils bloqués si le premier fil vérifie que le champ d'identifiant de fil de verrouillage est un fil valide et n'est pas le premier fil ;
étape 4 (805, 1603_1, 1703_1) : l'exécution, par le premier fil, d'une attente active si le premier fil vérifie que le champ de quantité de fils bloqués est inférieur à un premier seuil ; et
étape 5 (806, 1604_1, 1704_1) : lorsqu'une quantité de fois où le premier fil effectue une attente active atteint un second seuil, s'il est vérifié que le champ d'identifiant de fil de verrouillage est un fil valide et n'est pas le premier fil, l'exécution, par le premier fil, d'une opération d'ajout de 1 au champ de quantité de fils bloqués et de suspension pour entrer dans un état bloqué.

2. Procédé selon la revendication 1, après l'étape 3, comprenant également :
étape 6 (807, 1605_1, 1705_1) : si le premier fil vérifie que le champ de quantité de fils bloqués est supérieur ou égal au premier seuil, l'exécution, par le premier fil, d'une opération d'ajout de 1 au champ de quantité de fils bloqués et de suspension pour entrer dans un état bloqué.

3. Procédé selon la revendication 1 ou 2, dans lequel le mot de verrouillage comprend également un champ d'occurrences de verrouillage répété, et le champ d'occurrences de verrouillage répété est utilisé pour indiquer une quantité de fois où un fil de verrouillage détient le verrou cible.

4. Procédé selon la revendication 3, après l'étape 2, comprenant également :
étape 7 (808, 1702_2) : si le premier fil vérifie que le champ d'identifiant de fil de verrouillage est le premier fil, l'exécution, par le premier fil, d'une opération d'ajout de 1 au champ d'occurrences de verrouillage répété.

5. Procédé selon la revendication 3, après l'étape 2, comprenant également :
étape 8 (809) : si le premier fil vérifie que le champ d'identifiant de fil de verrouillage est un fil invalide, le réglage, par le premier fil, du champ d'identifiant de fil de verrouillage sur le premier fil et le réglage du champ d'occurrences de verrouillage répété sur une valeur initiale.

6. Procédé selon la revendication 3, dans lequel le procédé comprend également :
la demande, par le premier fil, de libération du verrou cible, comprenant :
étape 9 (1101) : l'obtention, par le premier fil, du mot de verrouillage du verrou cible ;
étape 10 (1102) : la vérification, par le premier fil, du champ d'identifiant de fil de verrouillage ;
étape 11 (1103) : la vérification, par le premier fil, du champ d'occurrences de verrouillage répété si le premier fil vérifie que le champ d'identifiant de fil de verrouillage est le premier fil ; et
étape 12 (1104) : si le premier fil vérifie que le champ d'occurrences de verrouillage répété n'est pas de 0, l'exécution, par le premier fil, d'une opération de soustraction de 1 du champ d'occurrences de verrouillage répété.

7. Procédé selon la revendication 6, après l'étape 12, comprenant également :
étape 13 (1106) : le réglage, par le premier fil, du champ d'identifiant de fil de verrouillage sur un fil invalide si le premier fil vérifie que le champ d'occurrences de verrouillage répété est de 0 ;
étape 14 (1106) : la vérification, par le premier fil, du champ de quantité de fils bloqués ; et
étape 15 (1107) : le réveil, par le premier fil, d'au moins un des fils à l'état bloqué pour le verrou cible si le premier fil vérifie que le champ de quantité de fils bloqués n'est pas de 0.

8. Procédé selon la revendication 3, dans lequel le procédé comprend également :
la demande, par le premier fil, de mettre fin à la détention du verrou cible, comprenant :
étape 16 (1301) : l'obtention, par le premier fil, du mot de verrouillage du verrou cible ;
étape 17 (1302) : la vérification, par le premier fil, du champ d'identifiant de fil de verrouillage ;
étape 18 (1303) : le stockage, par le premier fil, du champ d'occurrences de verrouillage répété comme contexte du premier fil pour le verrou cible si le premier fil vérifie que le champ d'identifiant de fil de verrouillage est le premier fil ;
étape 19 (1304) : l'ajout, par le premier fil, d'un identifiant, ID, de fil du premier fil à une liste d'attente de fils correspondant à un ID du verrou cible ; et
étape 20 (1305) : le réglage, par le premier fil, du champ d'occurrences de verrouillage répété sur 0, le réglage du champ d'identifiant de fil de verrouillage sur un fil invalide et la suspension pour entrer dans un état bloqué.

9. Procédé selon la revendication 8, après l'étape 20, comprenant également :
étape 21 (1306) : l'obtention, par le premier fil, d'un mot de verrouillage du verrou cible après avoir été réveillé ;
étape 22 (1307) : la vérification, par le premier fil, du champ d'identifiant de fil de verrouillage ;
étape 23 (1308) : si le premier fil vérifie que le champ d'identifiant de fil de verrouillage est le fil invalide, le réglage, par le premier fil, du champ d'identifiant de fil de verrouillage sur le premier fil, et le réglage du champ d'occurrences de verrouillage répété sur la base du contexte du premier fil pour le verrou cible ; et
étape 24 (1309) : la suppression, par le premier fil, de l'ID de fil du premier fil de la liste d'attente de fils correspondant à l'ID du verrou cible.

10. Dispositif électronique (1900), dans lequel le dispositif électronique (1900) comprend un processeur (1901) et une mémoire (1902), la mémoire (1902) stocke des instructions de programme, et le processeur (1901) invoque les instructions de programme pour qu'un premier fil demande l'obtention d'un verrou cible ; et
le fait que le premier fil demande l'obtention du verrou cible comprend :
étape 1 (801, 1601_1, 1701_1, 1701_2) : le premier fil obtient un mot de verrouillage du verrou cible, dans lequel le mot de verrouillage comprend un champ d'identifiant de fil de verrouillage et un champ de quantité de fils bloqués, le champ d'identifiant de fil de verrouillage est utilisé pour indiquer un fil détenant le verrou cible, et le champ de quantité de fils bloqués est utilisé pour indiquer une quantité de fils dans un état bloqué pour le verrou cible ;
étape 2 (802, 803, 1602_1, 1702_1) : le premier fil vérifie le champ d'identifiant de fil de verrouillage ;
étape 3 (804, 1602_1, 1702_1) : le premier fil vérifie le champ de quantité de fils bloqués si le premier fil vérifie que le champ d'identifiant de fil de verrouillage est un fil valide et n'est pas le premier fil ;
étape 4 (805, 1603_1, 1703_1) : le premier fil effectue une attente active si le premier fil vérifie que le champ de quantité de fils bloqués est inférieur à un premier seuil ; et
étape 5 (806, 1604_1, 1704_1) : lorsqu'une quantité de fois où le premier fil effectue une attente active atteint un second seuil, s'il est vérifié que le champ d'identifiant de fil de verrouillage est un fil valide et n'est pas le premier fil, le premier fil effectue une opération d'ajout de 1 au champ de quantité de fils bloqués et suspend pour entrer dans un état bloqué.

11. Dispositif électronique selon la revendication 10, dans lequel, après l'étape 3, le fait que le premier fil demande l'obtention du verrou cible comprend également :
étape 6 (807, 1605_1, 1705_1) : si le premier fil vérifie que le champ de quantité de fils bloqués est supérieur ou égal au premier seuil, le premier fil effectue une opération d'ajout de 1 au champ de quantité de fils bloqués et suspend pour entrer dans un état bloqué.

12. Dispositif électronique selon la revendication 10 ou 11, dans lequel le mot de verrouillage comprend également un champ d'occurrences de verrouillage répété, et le champ d'occurrences de verrouillage répété est utilisé pour indiquer une quantité de fois où un fil de verrouillage détient le verrou cible.

13. Dispositif électronique selon la revendication 12, dans lequel, après l'étape 2, le fait que le premier fil demande l'obtention du verrou cible comprend également :
étape 7 (808, 1702_2) : si le premier fil vérifie que le champ d'identifiant de fil de verrouillage est le premier fil, le premier fil effectue une opération d'ajout de 1 au champ d'occurrences de verrouillage répété.

14. Dispositif électronique selon la revendication 13, dans lequel, après l'étape 2, le fait que le premier fil demande l'obtention du verrou cible comprend également :
étape 8 (809) : si le premier fil vérifie que le champ d'identifiant de fil de verrouillage est un fil invalide, le premier fil règle le champ d'identifiant de fil de verrouillage sur le premier fil et règle le champ d'occurrences de verrouillage répété sur une valeur initiale.

15. Support de stockage lisible par ordinateur, dans lequel le support de stockage lisible par ordinateur comprend des instructions de programme, et lorsque les instructions de programme sont exécutées sur un dispositif électronique (1900), le dispositif électronique (1900) est activé pour effectuer le procédé selon l'une quelconque des revendications 1 à 9.
